# EUROPÄISCHE PATENTSCHRIFT

(11) **EP 4 505 972 B1**
(45) Veröffentlichungstag und Bekanntmachung des Hinweises auf die Patenterteilung: **25.03.2026**
(21) Anmeldenummer: 23191040.7
(22) Anmeldetag: 11.08.2023
(51) Int. Cl.: A61C 13/09, A61C 13/00, A61C 5/77

(54) **VERFAHREN ZUM BESTIMMEN EINES INNENAUFBAUS EINES ERSATZZAHNS, VERFAHREN ZUR HERSTELLUNG EINES ERSATZZAHNS, ERSATZZAHN, VORRICHTUNG ZUR DATENVERARBEITUNG, COMPUTERPROGRAMM UND COMPUTERLESBARES MEDIUM**
METHOD FOR DETERMINING AN INTERNAL STRUCTURE OF A REPLACEMENT TOOTH, METHOD FOR PRODUCING A REPLACEMENT TOOTH, REPLACEMENT TOOTH, DATA PROCESSING DEVICE, COMPUTER PROGRAM AND COMPUTER-READABLE MEDIUM
PROCÉDÉ DE DÉTERMINATION D'UNE STRUCTURE INTERNE D'UNE DENT DE REMPLACEMENT, PROCÉDÉ DE FABRICATION D'UNE DENT DE REMPLACEMENT, APPAREIL DE TRAITEMENT DE DONNÉES, PROGRAMME INFORMATIQUE ET SUPPORT LISIBLE PAR ORDINATEUR

(43) Veröffentlichungstag der Anmeldung: 12.02.2025
(73) Patentinhaber: Ivoclar Vivadent AG, 9494 Schaan (LI)
(72) Erfinder: JOHN, Hendrik, 9487 Gamprin (LI)
(74) Vertreter: Maiwald GmbH

(56) Entgegenhaltungen:
- WO-A1-2004/037112
- WO-A1-2021/122013

## Beschreibung

Die Erfindung betrifft ein Verfahren zum Bestimmen eines Innenaufbaus eines Ersatzzahns.

Zudem ist die Erfindung auf ein Verfahren zur Herstellung eines Ersatzzahns mit einer vorgegebenen äußeren Hülle gerichtet.

Außerdem betrifft die Erfindung einen Ersatzzahn, eine Vorrichtung zur Datenverarbeitung, ein Computerprogramm und ein computerlesbares Medium.

Im Bereich der Herstellung von Ersatzzähnen oder, allgemeiner gesprochen, im Bereich des Zahnersatzes, ist es bekannt, Ersatzzähne oder diese umfassende Teil- oder Vollprothesen ausgehend von vorgefertigten Zähnen aus Kunststoff herzustellen. Hierzu sind vorgefertigte Zähne mit unterschiedlichen Geometrien, optischen Eigenschaften und mechanischen Eigenschaften am Markt verfügbar. Im Sinne einer möglichst originalgetreuen Nachbildung gilt es dabei, denjenigen vorgefertigten Zahn auszuwählen, der dem zu ersetzenden Zahn am nächsten kommt. Der ausgewählte vorgefertigte Zahn kann dann noch patientenspezifisch angepasst werden. Das erfolgt manuell.

Ebenso ist es bekannt, digitale Fertigungstechnologien zu verwenden, um Ersatzzähne oder, allgemeiner gesprochen, Zahnersatz herzustellen. Hierfür werden sogenannte CAD-CAM-Systeme verwendet. Der Ersatzzahn oder eine den Ersatzzahn umfassende Teil- oder Vollprothese wird dabei zunächst im digitalen Raum erstellt, d.h. gestaltet. Hierfür können sogenannte Zahnbibliotheken genutzt werden, die Außenhülledaten, die eine äußere Hülle einer Vielzahl verschiedener Ersatzzähne beschreiben, zur Verfügung stellen. Dabei kann die äußere Hülle des Ersatzzahns, der Teil- oder Vollprothese virtuell und dreidimensional an eine Patientensituation angepasst werden. Das erfolgt mithilfe der CAD-Software, d.h. im digitalen Raum. Solche Ersatzzähne, Teilprothesen oder Vollprothesen können mittels subtraktiver Fertigungsverfahren, z. B. Fräs-Verfahren oder Schleif-Verfahren, oder mittels additiver Fertigungsverfahren, z. B. 3D-Druckverfahren, hergestellt werden.

In der WO 2021/122013 A1 wird ein Verfahren zur Definition mindestens einer Grenzfläche im Inneren eines künstlichen Zahnelements gezeigt.

Die WO 2004/037112 A1 beschreibt eine Zahnprothese sowie ein Verfahren für deren Herstellung.

Die Aufgabe der vorliegenden Erfindung liegt nun darin, die Originaltreue von Ersatzzähnen, d. h. ein natürlich wirkendes Erscheinungsbild der Ersatzzähne, weiter zu verbessern. Mit anderen Worten soll eine Möglichkeit geschaffen werden, Ersatzzähne herzustellen, die natürlichen Zähnen möglichst nahekommen.

Gemäß einem ersten Aspekt der Erfindung ist ein Verfahren zum Bestimmen eines Innenaufbaus eines Ersatzzahns vorgesehen. Das Verfahren umfasst:
- erhalten von Außenhülledaten, die eine äußere Hülle des Ersatzzahns beschreiben,
- definieren oder erhalten einer ersten Bezugsgeometrieinformation, die eine erste Bezugsgeometrie beschreibt, welche die äußere Hülle des Ersatzzahns virtuell in einen ersten Hüllenabschnitt und einen zweiten Hüllenabschnitt unterteilt,
- erstellen einer ersten Stauchungshülle durch virtuelles Stauchen des ersten Hüllenabschnitts in eine Richtung zur ersten Bezugsgeometrie um ein erstes Stauchungsmaß, wobei die erste Bezugsgeometrie eine Stauchungsbasis darstellt, und
- ableiten wenigstens eines Subvolumens des Ersatzzahns als ein von der ersten Stauchungshülle begrenztes Volumen.

Dem erfindungsgemäßen Verfahren liegt die Beobachtung zugrunde, dass die Originaltreue von Ersatzzähnen nicht nur von einer möglichst naturgetreuen äußeren Hülle, sondern auch vom Innenaufbau des Ersatzzahns abhängt. Ähnlich wie bei einem natürlichen Zahn, dessen Innenaufbau sich im Wesentlichen in eine Zahnwurzel, einen Dentinkern und eine Schneide untergliedern lässt, hängt auch das naturgetreue Erscheinungsbild eines Ersatzzahns vom Zusammenspiel verschiedener Abschnitte oder Schichten ab, die unterschiedliche optische Eigenschaften, insbesondere eine unterschiedliche Transluzenz, aufweisen. Die Gesamtheit dieser verschiedenen Abschnitte oder Schichten bildet dabei den Innenaufbau des Ersatzzahns. Dieser Erkenntnis trägt das erfindungsgemäße Verfahren Rechnung, wobei sich mittels dieses Verfahrens ein Innenaufbau des Ersatzzahns bestimmen lässt, der zu einem äußerst naturgetreuen Erscheinungsbild führt. Gleichzeitig ist das erfindungsgemäße Verfahren vergleichsweise einfach und lässt sich insbesondere innerhalb einer CAD-Software oder innerhalb einer CAM-Software leicht umsetzen. Die Verfahrensschritte stellen dabei ein Regelwerk dar, das innerhalb der CAD-Software oder CAM-Software automatisiert umgesetzt werden kann. Als Eingangsdaten werden Außenhülledaten verwendet, die, wie bereits erwähnt, ihren Ursprung in einer an sich bekannten Zahnbibliothek haben können und/oder innerhalb einer dentalen CAD-Software oder einer dentalen CAM-Software angepasst oder modelliert werden können. Ferner werden als Eingangsdaten eine Bezugsgeometrieinformation sowie ein erstes Stauchungsmaß benötigt. In diesem Zusammenhang kann die Bezugsgeometrieinformation optional aus den Außenhülledaten abgeleitet werden. Das Stauchungsmaß kann absolut, z. B in mm, oder relativ, z. B. in Prozent, angegeben werden. Als Bezugsgröße kann dabei eine Abmessung der äußeren Hülle oder eine Abmessung einer sogenannten Bounding Box des Ersatzzahns, d.h. eines Quaders, der den Ersatzzahn einhüllt, verwendet werden. Dabei wird beim Stauchen ein entlang einer Stauchungsrichtung gemessener Abstand jedes Punktes der zu stauchenden Geometrie von der Bezugsgeometrie um einen die Stauchung definierenden Anteil reduziert. Anders gesagt wird jeder dieser Abstände mit einem Stauchungsfaktor multipliziert, der kleiner als eins ist. Das führt dazu, dass beim Stauchen Spitzen und Vertiefungen geglättet werden, was das Stauchen insbesondere vom Parallelverschieben oder vom proportionalen Skalieren der äußeren Hülle unterscheidet. In einem einfachen numerischen Beispiel liegt eine Spitze der zu stauchenden Geometrie 10 mm über einer Stauchungsbasis, ein Mittelabschnitt der zu stauchenden Geometrie liegt 5 mm über der Stauchungsbasis und eine Vertiefung der zu stauchenden Geometrie liegt 3 mm über der Stauchungsbasis. Eine Stauchung mit einem Stauchungsfaktor von 0,8 führt somit dazu, dass in der gestauchten Geometrie die Spitze bei 8 mm liegt, der Mittelabschnitt bei 4 mm, und die Vertiefung bei 2,4 mm. Eine Stauchungsbasis wird im Zusammenhang mit dem erfindungsgemäßen Verfahren als eine feststehende Geometrie verstanden, gegen die die Stauchung stattfindet. Die Stauchung des ersten Hüllenabschnitts zum Erstellen einer Stauchungshülle, auf deren Basis sich ein Subvolumen des Ersatzzahns ableiten lässt, hat insbesondere den Vorteil, dass sich Subvolumina, z. B. in Form von Schichten, erstellen lassen, die einen Dickenverlauf haben. Mit anderen Worten kann ein derart erstelltes Subvolumen, z. B. in Form einer Schicht, eine variable Dicke haben. Dabei kann die Dicke über die Wahl des Stauchungsmaßes beeinflusst werden. Die Tatsache, dass die Stauchung virtuell erfolgt, bedeutet, dass der erste Hüllenabschnitt der durch die Außenhülledaten beschriebenen äußeren Hülle im digitalen Raum gestaucht wird. Es findet also kein physisches Stauchen eines physischen Objekts statt. Durch das Stauchen des ersten Hüllenabschnitts der äußeren Hülle, die eine dreidimensionale Geometrie des Ersatzzahns beschreibt, wird eine weitere dreidimensionale Geometrie generiert, die vorliegend als Stauchungshülle bezeichnet wird. Die Stauchungsbasis oder Bezugsgeometrie untergliedert dabei die äußere Hülle in zwei Außenhüllenabschnitte. Die Stauchungsbasis oder Bezugsgeometrie wird derart gewählt, dass die Stauchungshülle aufgrund der Stauchung in Richtung der Bezugsgeometrie im Inneren der von den Außenhülledaten beschriebenen äußeren Hülle liegt. Auf diese Weise lassen sich durch die Stauchungshülle sowie die Abschnitte der äußeren Hülle verschiedene Subvolumina des Ersatzzahns definieren. Wie nachfolgend noch erläutert werden wird, kann ein derart erzeugtes Subvolumen der Nachbildung einer Zahnschneide oder eines Dentinkerns dienen. Insbesondere kann ein Subvolumen durch den ersten Außenhüllenabschnitt und die erste Stauchungshülle begrenzt sein. Ein anderes Subvolumen kann durch den zweiten Außenhüllenabschnitt und die erste Stauchungshülle begrenzt sein. Die Subvolumina bilden einen Innenaufbau des Ersatzzahns, der dem Ersatzzahn ein natürliches Erscheinungsbild verleiht.

In einem Beispiel wird das erste Stauchungsmaß so gewählt, dass sich entlang der Stauchungsrichtung ein maximaler Abstand von 0,5 mm bis 10 mm zwischen dem ersten Hüllenabschnitt und der ersten Stauchungshülle ergibt. Bevorzugt beträgt dieser Abstand 0,5 mm bis 2,5°mm. In einer anderen Variante beträgt dieser Abstand 3,5 mm bis 6 mm, z. B. 5 mm.

Das erfindungsgemäße Verfahren wird insbesondere automatisiert, teilautomatisiert und/oder computergestützt ausgeführt. Das bedeutet, dass sich der Innenaufbau im Wesentlichen ohne menschliches Zutun bestimmen lässt. In diesem Zusammenhang stellen die Verfahrensschritte ein Regelwerk dar, das computergestützt abgearbeitet wird.

Das erfindungsgemäße Verfahren zum Bestimmen eines Innenaufbaus eines Ersatzzahns kann somit ein computerimplementiertes Verfahren sein.

Es versteht sich, dass im Zusammenhang mit dem erfindungsgemäßen Verfahren Begriffe wie "erster" und "zweiter" lediglich der einfachen Erläuterung dienen und keine Mengen oder Anzahlen implizieren.

Auch wenn das erfindungsgemäße Verfahren für einen Ersatzzahn erläutert wurde, versteht es sich, dass das erfindungsgemäße Verfahren auch für Teil- oder Totalprothesen genutzt werden kann, die solche Ersatzzähne umfassen.

Gemäß einem Ausführungsbeispiel umfasst das Verfahren ferner:
- erstellen einer zweiten Stauchungshülle durch virtuelles Stauchen des ersten Hüllenabschnitts oder der ersten Stauchungshülle in eine Richtung zur ersten Bezugsgeometrie um ein zweites Stauchungsmaß, wobei die erste Bezugsgeometrie eine Stauchungsbasis darstellt, und
- ableiten wenigstens eines Subvolumens des Ersatzzahns als ein von der zweiten Stauchungshülle begrenztes Volumen.

Es finden also zwei Stauchungen statt, die dieselbe Stauchungsbasis nutzen. Optional wird dabei ein anderes Stauchungsmaß verwendet. Alternativ oder zusätzlich wird für das Erstellen der zweiten Stauchungshülle eine andere Ausgangsgeometrie verwendet als für das Erstellen der ersten Stauchungshülle. In einem ersten Beispiel wird der erste Hüllenabschnitt bei den beiden Stauchungen unterschiedlich stark gestaucht. In einem anderen Beispiel wird die erste Stauchungshülle, die selbst durch eine virtuelle Stauchung bestimmt wurde, nochmals gestaucht. Auf diese Weise lassen sich sehr einfach und effizient zwei Stauchungshüllen bestimmen. Diese untergliedern jeweils eine durch die Außenhülledaten definierte äußere Hülle in Subvolumina. Beispielsweise ist ein Subvolumen dabei durch die zweite Stauchungshülle und den ersten Hüllenabschnitt begrenzt. Ein anderes Subvolumen kann durch die zweite Stauchungshülle und den zweiten Hüllenabschnitt begrenzt sein. Ein weiteres Subvolumen kann durch die erste Stauchungshülle und die zweite Stauchungshülle begrenzt sein. Folglich kann auf einfache und effiziente Weise ein feingliedriger Innenaufbau des Ersatzzahns bestimmt werden, dessen Subvolumina beispielsweise die Form von Schichten haben. Ein derartiger Innenaufbau kommt einem Aufbau eines natürlichen Zahns sehr nahe.

Es versteht sich, dass das erfindungsgemäße Verfahren nicht auf zwei Stauchungen beschränkt ist, die verschiedene Stauchungsmaße jedoch dieselbe Bezugsgeometrie nutzen. Selbstverständlich können auch drei, vier, fünf oder noch mehr Stauchungen unter Nutzung derselben Bezugsgeometrie erfolgen, wobei jeweils unterschiedliche Stauchungsmaße verwendet werden.

Das Verfahren kann ferner umfassen:
- definieren oder erhalten einer zweiten Bezugsgeometrieinformation, die eine zweite Bezugsgeometrie beschreibt, welche von der ersten Bezugsgeometrie verschieden ist und welche die äußere Hülle des Ersatzzahns virtuell in einen dritten Hüllenabschnitt und einen vierten Hüllenabschnitt unterteilt,
- erstellen einer dritten Stauchungshülle durch virtuelles Stauchen des dritten Hüllenabschnitts oder der ersten Stauchungshülle oder der zweiten Stauchungshülle in eine Richtung zur zweiten Bezugsgeometrie um ein drittes Stauchungsmaß, wobei die zweite Bezugsgeometrie eine Stauchungsbasis darstellt, und
- ableiten wenigstens eines Subvolumens des Ersatzzahns als ein von der dritten Stauchungshülle begrenztes Volumen.

Gemäß diesem Beispiel umfasst das Verfahren also wenigstens zwei virtuelle Stauchungen, wobei für jede der wenigstens zwei virtuellen Stauchungen eine andere Bezugsgeometrie als Stauchungsbasis verwendet wird. Zudem deckt dieses Beispiel drei Alternativen ab, die unterschiedliche Ausgangsgeometrien für die virtuelle Stauchung betreffen. Die Ausgangsgeometrien umfassen den dritten Hüllenabschnitt, die erste Stauchungshülle und die zweite Stauchungshülle. Auf diese Weise lassen sich sehr einfach und effizient wenigstens zwei Stauchungshüllen bestimmen. Diese untergliedern jeweils eine durch die Außenhülledaten definierte äußere Hülle des Ersatzzahns in Subvolumina. Beispielsweise kann dabei ein Subvolumen durch die dritte Stauchungshülle und den dritten Hüllenabschnitt begrenzt sein. Ein anderes Subvolumen kann durch die dritte Stauchungshülle und den vierten Hüllenabschnitt begrenzt sein. Auch ist es denkbar, dass ein Subvolumen durch die dritte Stauchungshülle und die erste Stauchungshülle begrenzt ist. Ebenso ist es möglich, dass ein Subvolumen durch die dritte Stauchungshülle und die zweite Stauchungshülle begrenzt ist, sofern eine zweite Stauchungshülle vorhanden ist. Folglich kann auf einfache und effiziente Weise ein feingliedriger Innenaufbau des Ersatzzahns bestimmt werden. Dabei können die Subvolumina als Schichten geformt sein. Ein derartiger Innenaufbau kommt einem Aufbau eines natürlichen Zahns sehr nahe.

Es versteht sich, dass das erfindungsgemäße Verfahren nicht auf die Verwendung von zwei Bezugsgeometrien als Stauchungsbasen beschränkt ist. Selbstverständlich können auch drei, vier, fünf oder mehr Bezugsgeometrien verwendet werden und unter Nutzung dieser Bezugsgeometrien eine entsprechende Anzahl an Stauchungen vorgenommen werden.

Es versteht sich, dass in Ausführungsformen des erfindungsgemäßen Verfahrens zum Bestimmen des Innenaufbaus des Ersatzzahns, bei denen zwei oder mehr Subvolumina abgeleitet werden, das Ableiten von Subvolumina auch das Anwenden boolescher Operationen auf die Subvolumina umfasst. Es können also im Rahmen des Ableitens wenigstens eines Subvolumens auch zwei oder mehr Subvolumina vereint werden. Alternativ oder zusätzlich können Subvolumina geschnitten werden, d.h. gemeinsame Abschnitte zweier oder mehr Subvolumina als ein neues Subvolumen definiert werden. Auf diese Weise kann ein besonders naturgetreuer Innenaufbau für den Ersatzzahn bestimmt werden.

Bevorzugt umfasst der Innenaufbau des Ersatzzahns zwei bis fünf Subvolumina. Insbesondere umfasst der Innenaufbau drei Subvolumina. Ein derartiger Innenaufbau stellt einen guten Kompromiss zwischen einer einfachen Struktur des Innenaufbaus, d. h. möglichst wenigen Subvolumina, und einer hohen Originaltreue des Ersatzzahns, d. h. einem möglichst naturgetreuen Erscheinungsbild, dar.

In einer Variante umfasst das Verfahren ferner: Zuordnen einer Materialinformation, einer Farbinformation, einer Transluzenzinformation und/oder einer Anatomieinformation zu einem der Subvolumina oder mehreren der Subvolumina. Das bedeutet, dass jedem der Subvolumina eine Materialinformation, eine Farbinformation, eine Transluzenzinformation und eine Anatomieinformation zugeordnet werden kann. Auf diese Weise wird der Innenaufbau des Ersatzzahns näher definiert. Dabei können auch mehreren Subvolumina dieselbe Materialinformation, dieselbe Farbinformation, dieselbe Transluzenzinformation und/oder dieselbe Anatomieinformation zugeordnet werden. In einem Beispiel wird einem oder mehreren Subvolumina die Anatomieinformation Dentinkern zugeordnet. Dieses eine Subvolumen oder diese mehreren Subvolumina bilden also innerhalb des Ersatzzahns den Dentinkern nach. In diesem Beispiel kann allen Subvolumina, denen die Anatomieinformation Dentinkern zugeordnet ist, dieselbe Materialinformation, dieselbe Farbinformation und dieselbe Transluzenzinformation zugeordnet werden. Dabei kann berücksichtigt werden, dass der Dentinkern innerhalb des Ersatzzahns vergleichsweise opak und vergleichsweise dunkel ist. In einem anderen Beispiel wird einem oder mehreren Subvolumina die Anatomieinformation Zahnhals zugeordnet. Dieses eine Subvolumen oder diese mehreren Subvolumina bilden also innerhalb des Ersatzzahns den Zahnhals nach. In diesem Beispiel kann allen Subvolumina, denen die Anatomieinformation Zahnhals zugeordnet ist, dieselbe Materialinformation, dieselbe Farbinformation und dieselbe Transluzenzinformation zugeordnet werden. Dabei kann berücksichtigt werden, dass der Zahnhals innerhalb des Ersatzzahns vergleichsweise opak und dunkel ist. In einem weiteren Beispiel wird einem oder mehreren Subvolumina die Anatomieinformation Schneide oder Zahnschneide zugeordnet. Dieses eine Subvolumen oder diese mehreren Subvolumina bilden also innerhalb des Ersatzzahns die Schneide nach. In diesem Beispiel kann allen Subvolumina, denen die Anatomieinformation Schneide zugeordnet ist, dieselbe Materialinformation, dieselbe Farbinformation und dieselbe Transluzenzinformation zugeordnet werden. Dabei kann berücksichtigt werden, dass innerhalb des Ersatzzahns die Schneide vergleichsweise hell und transluzent ist. Es versteht sich, dass die vorgenannten Beispiele auch kombiniert werden können. Insgesamt lässt sich auf diese Weise ein Innenaufbau des Ersatzzahns im Detail definieren, sodass der Ersatzzahn ein naturgetreues Erscheinungsbild aufweist.

Gemäß einer Ausführungsform ist wenigstens eine Bezugsgeometrie durch eine Äquatorlinie der äußeren Hülle des Ersatzzahns definiert. Alternativ ist wenigstens eine Bezugsgeometrie durch eine Ebene definiert, die einen Massenschwerpunkt und/oder Volumenschwerpunkt der äußeren Hülle des Ersatzzahns beinhaltet. Weiter alternativ ist wenigstens eine Bezugsgeometrie durch eine Ebene definiert, die einen Extrempunkt der äußeren Hülle des Ersatzzahns beinhaltet. In diesem Zusammenhang ist unter einer Äquatorlinie eine Linie zu verstehen, die entlang des größten Umfangs des Ersatzzahns verläuft. Als Bezugslinie dient hierfür eine Zahnachse, die durch einen Massenschwerpunkt oder Volumenschwerpunkt des Ersatzzahns verläuft und entlang einer Zahnhöhenrichtung, d. h. in eine Richtung von der Zahnwurzel zur Zahnkrone, orientiert ist. Man kann sich das Erstellen der Äquatorlinie derart vorstellen, dass ein gerader Kreiszylinder, dessen Mittelachse parallel zur Zahnachse verläuft, außen am Zahn abgerollt wird. Diejenige Linie, entlang derer der Kreiszylinder beim Abrollen den Zahn berührt, ist die Äquatorlinie. Eine solche Äquatorlinie wird auch als anatomischer Zahnäquator bezeichnet. Im Unterschied dazu wird ein prothetischer Zahnäquator mit Bezug auf eine Einschubrichtung der Prothese bestimmt. Der prothetische Zahnäquator kann also in gleicher Weise bestimmt werden wie der anatomische Zahnäquator, wobei jedoch anstatt der Zahnachse die Einschubrichtung verwendet wird. Die Äquatorlinie ist also in beiden Varianten nicht zwingend gerade. Ferner wird unter einem Extrempunkt der äußeren Hülle beispielsweise ein oberster Punkt oder ein unterster Punkt der äußeren Hülle des Ersatzzahns verstanden. Die Äquatorlinie, der Massenschwerpunkt, der Volumenschwerpunkt und/oder ein Extrempunkt kann im Rahmen des erfindungsgemäßen Verfahrens ermittelt werden. Derartige Bezugsgeometrie lassen sich einfach und zuverlässig ermitteln. Gleichzeitig erlauben sie virtuelle Stauchungen, die zu realitätsgetreuen Innenaufbauten führen.

Das Verfahren kann zudem umfassen: Ignorieren von Abschnitten wenigstens einer Stauchungshülle, die außerhalb der äußeren Hülle des Ersatzzahns liegen. Insbesondere werden alle Abschnitte von Stauchungshüllen ignoriert, die außerhalb der äußeren Hülle des Ersatzzahns liegen. Dies kann durch einfache boolesche Operationen geschehen. Die äußere Hülle des Ersatzzahns bleibt also bei allen Stauchungen erhalten.

Eine Stauchungsrichtung kann entlang einer Zahnhöhenrichtung des Ersatzzahns, einer Zahnbreitenrichtung des Ersatzzahns oder einer Zahntiefenrichtung des Ersatzzahns verlaufen. Die Stauchungsrichtung fällt also mit der Zahnhöhenrichtung, der Zahnbreitenrichtung oder der Zahntiefenrichtung zusammen. Alternativ ist die Stauchungsrichtung parallel zur Zahnhöhenrichtung, zur Zahnbreitenrichtung oder zur Zahntiefenrichtung orientiert.

Zu diesem Zweck kann ein zahnindividuelles Koordinatensystem verwendet werden. Der Ursprung dieses Koordinatensystems liegt dabei im Volumenschwerpunkt der äußeren Hülle des Ersatzzahns. Für die Festlegung der Richtung der X-Achse wird die Orientierung und Position des Ersatzzahns im menschlichen Kiefer betrachtet. Sind mehrere Zähne am Kiefer vorhanden, kann für jeden Zahn der zugehörige Volumenschwerpunkt der äußeren Hülle ermittelt werden. Werden alle Volumenschwerpunkte aller Zähne am Kiefer verbunden, ergibt sich ein sogenannter Zahnbogen. Die Form des Zahnbogens ähnelt einer Parabel, wobei ein Scheitelpunkt der Parabel zwischen den mittleren Schneidezähnen liegt. Die X-Achse verläuft in diesem Zusammenhang tangential zum Zahnbogen. Es versteht sich dabei, dass der Zahnbogen zwar streng genommen lediglich dann definiert ist, wenn auch die Position und Orientierung der zum betrachteten Zahn benachbarten Zähne bekannt ist. Allerdings lässt sich für den Fachmann der relevante Abschnitt des Zahnbogens auch anhand der äußeren Hülle des Ersatzzahns alleine bestimmen. Die X-Achse verläuft also parallel zu einer Zahnbreitenrichtung. Die Z-Achse verläuft senkrecht zur X-Achse und ist in Richtung Okklusion orientiert. Das bedeutet, dass die Z-Achse in Richtung Zahnspitze oder in Richtung weg von der Zahnwurzel zeigt. Mit anderen Worten ist die Z-Achse parallel zur Zahnhöhenrichtung orientiert. Die Y-Achse steht sowohl auf der X-Achse als auch auf der Z-Achse senkrecht und ist in Richtung zur Zunge oder zum Gaumen positiv. Die Y-Achse ist somit parallel zur Zahntiefenrichtung orientiert.

Auch kann das Verfahren umfassen: Ermitteln eines Zahntyps des Ersatzzahns basierend auf den Außenhülledaten oder erhalten einer Zahntypinformation, die einen Zahntyp des Ersatzzahns beschreibt, und wählen des Stauchungsmaßes und/oder der Bezugsgeometrie in Abhängigkeit des Zahntyps. Zum Beispiel kann eine Zahntypinformation in Form von Metadaten der Außenhülledaten erhalten werden. Alternativ oder zusätzlich kann ein Zahntyp anhand einer Größe einer Bounding Box um den relevanten Zahn ermittelt werden. Dabei können sowohl absolute Abmessungen der Bounding Box in unterschiedlichen Dimensionen als auch Verhältnisse der Abmessungen der Bounding Box in unterschiedlichen Dimensionen berücksichtigt werden. Es können also Absolutwerte von Abmessungen der Bounding Box entlang der X-Achse, der Y-Achse und der Z-Achse eines zahnindividuellen Koordinatensystems und deren Verhältnisse zueinander berücksichtigt werden. Dabei sind die Kanten der Bounding Box entlang der Achsen des zahnindividuellen Koordinatensystems orientiert. Ebenso kann eine Position des Ersatzzahns auf einem Zahnbogen einen Anhaltspunkt für einen Zahntyp liefern. Beispielhafte Zahntypen sind Schneidezahn, Eckzahn und Backenzahn. Dabei werden die Backenzähne auch als Molaren bezeichnet. Die Schneidezähne und die Eckzähne können für das erfindungsgemäße Verfahren auch zu einem Zahntyp zusammengefasst werden. Die Schneidezähne und die Eckzähne werden dabei häufig zusammen als Frontzähne bezeichnet. Wird das Stauchungsmaß und/oder die Bezugsgeometrie in Abhängigkeit des Zahntyps gewählt, lassen sich die Innenaufbauten von Ersatzzähnen unterschiedlichen Typs unterschiedlich bestimmen. Auf diese Weise wird ein besonders naturgetreuer Aufbau der Ersatzzähne erreicht.

In einer Variante umfasst das Verfahren zusätzlich: Ermitteln einer Zahneigenschaft des Ersatzzahns basierend auf den Außenhülledaten oder erhalten einer Zahneigenschaftsinformation, die eine Zahneigenschaft des Ersatzzahns beschreibt, und wählen des Stauchungsmaßes und/oder der Bezugsgeometrie in Abhängigkeit der Zahneigenschaft. In diesem Zusammenhang betrifft eine Zahneigenschaft jede Charakteristik, die den Ersatzzahn beschreibt. Insbesondere lassen sich anhand der Zahneigenschaft auch Ersatzzähne desselben Zahntyps unterscheiden. Mit anderen Worten lassen sich basierend auf der Zahneigenschaft Ersatzzähne desselben Zahntyps individualisieren. Eine beispielhafte Zahneigenschaft ist eine Größe des Ersatzzahns. Dabei können sowohl absolute Abmessungen in unterschiedlichen Dimensionen als auch Verhältnisse der Abmessungen des Ersatzzahns in unterschiedlichen Dimensionen berücksichtigt werden. Es können also Absolutwerte von Abmessungen des Ersatzzahns entlang der X-Achse, der Y-Achse und der Z-Achse eines zahnindividuellen Koordinatensystems und deren Verhältnisse zueinander berücksichtigt werden. Wie bereits erläutert, kann hierzu eine Bounding Box verwendet werden. Es kann folglich das Stauchungsmaß und/oder die Bezugsgeometrie in Abhängigkeit der Größe des Ersatzzahns gewählt werden. Somit können verschiedene Stauchungsmaße und/oder Bezugsgeometrien auch für Ersatzzähne desselben Zahntyps verwendet werden. Ein weiteres Beispiel einer Zahneigenschaft stellt eine Position des Ersatzzahns am Kiefer dar. Es kann folglich das Stauchungsmaß und/oder die Bezugsgeometrie in Abhängigkeit der Position des Ersatzzahns am Kiefer gewählt werden. Auf diese Weise kann ein besonders naturgetreues Erscheinungsbild des Ersatzzahns erreicht werden.

Außerdem ist es möglich, dass das Verfahren umfasst: Bereitstellen einer Innenaufbauinformation, die wenigstens eine Geometrie und/oder Lage eines Subvolumens beschreibt. Für den Fall, dass mehrere Subvolumina vorgesehen sind, beschreibt die Innenaufbauinformation selbstverständlich eine Geometrie und/oder Lage aller Subvolumina innerhalb der äußeren Hülle des Ersatzzahns. Eine solche Aufbauinformation ist insbesondere für Maschinen und Anlagen bedeutsam, die der Herstellung des Ersatzzahns dienen. Eine beispielhafte Maschine ist ein 3D-Drucker. Es lässt sich somit der Ersatzzahn mit dem bestimmten Innenaufbau effizient und zuverlässig herstellen.

Für den Fall, dass ein Ersatzzahn, der einen mittels des erfindungsgemäßen Verfahrens generierten Innenaufbau aufweist, mittels eines generativen Herstellungsverfahrens, zum Beispiel 3D-Druck, hergestellt werden soll, kann für den Ersatzzahn mit dem mittels des erfindungsgemäßen Verfahrens generierten Innenaufbau unter Nutzung bekannter Verfahren ein Schichtaufbau definiert werden, sodass sich dieser Ersatzzahn schichtweise herstellen lässt. In diesem Zusammenhang werden beispielsweise für die unterschiedlichen Subvolumina des Innenaufbaus Materialien mit unterschiedlichen Eigenschaften verwendet. Dementsprechend eignen sich Verfahren des Multimaterial- oder Multifarb-3D-Drucks ganz besonders zur Herstellung eines Ersatzzahns mit einem mittels des erfindungsgemäßen Verfahrens definierten Innenaufbau.

Gemäß einem zweiten Aspekt der Erfindung ist ein Verfahren zur Herstellung eines Ersatzzahns mit einer vorgegebenen äußeren Hülle vorgesehen. Das Verfahren umfasst:
- bestimmen eines Innenaufbaus des Ersatzzahns mit wenigstens einem Subvolumen mittels des erfindungsgemäßen Verfahrens zum Bestimmen eines Innenaufbaus eines Ersatzzahns, und
- fertigen des Ersatzzahns mit dem bestimmten Innenaufbau mittels Werkstoffen, die sich in wenigstens einem ausgewählt aus Material, Farbe und Transluzenz unterscheiden.

Es werden also hinsichtlich Material, Farbe und/oder Transluzenz unterschiedliche Werkstoffe zum Fertigen des Innenaufbaus des Ersatzzahns verwendet. Ein derartiger Ersatzzahn zeichnet sich durch ein äußerst naturgetreues Erscheinungsbild aus. Gleichzeitig ist das erfindungsgemäße Verfahren vergleichsweise einfach und lässt sich insbesondere innerhalb eines CAD-CAM-Workflows leicht umsetzen.

Gemäß einem dritten Aspekt der Erfindung ist ein Ersatzzahn mit einer äußeren Hülle und einem Innenaufbau vorgesehen. Der Innenaufbau ist mittels des erfindungsgemäßen Verfahrens zum Bestimmen eines Innenaufbaus eines Ersatzzahns bestimmt. Wie bereits erwähnt, hängt die Originaltreue von Ersatzzähnen nicht nur von einer möglichst naturgetreuen äußeren Hülle, sondern auch vom Innenaufbau des Ersatzzahns ab. Ähnlich wie bei einem natürlichen Zahn, dessen Innenaufbau sich im Wesentlichen in eine Zahnwurzel, einen Dentinkern und eine Schneide untergliedern lässt, hängt auch das naturgetreue Erscheinungsbild eines Ersatzzahns vom Zusammenspiel verschiedener Abschnitte oder Schichten ab, die unterschiedliche optische Eigenschaften, insbesondere eine unterschiedliche Transluzenz, aufweisen. Die Gesamtheit dieser verschiedenen Abschnitte oder Schichten bildet dabei den Innenaufbau des Ersatzzahns. Ein derartiger Ersatzzahn zeichnet sich somit durch ein äußerst naturgetreues Erscheinungsbild aus.

Gemäß einem vierten Aspekt der Erfindung ist eine Vorrichtung zur Datenverarbeitung vorgesehen. Die Vorrichtung zur Datenverarbeitung umfasst Mittel zur Ausführung des erfindungsgemäßen Verfahrens zum Bestimmen eines Innenaufbaus eines Ersatzzahns. Wie bereits erwähnt, kann mittels des erfindungsgemäßen Verfahrens zum Bestimmen eines Innenaufbaus eines Ersatzzahnes ein Innenaufbau für einen Ersatzzahn bestimmt werden, der dem Ersatzzahn ein äußerst naturgetreues Erscheinungsbild verleiht. Durch Nutzung einer erfindungsgemäßen Vorrichtung zur Datenverarbeitung lässt sich dabei ein derartiger Innenaufbau für einen Ersatzzahn einfach und zuverlässig ermitteln.

Gemäß einem fünften Aspekt der Erfindung ist ein Computerprogramm vorgesehen. Das Computerprogramm umfasst Befehle, die bei der Ausführung des Computerprogramms durch einen Computer diesen veranlassen, das erfindungsgemäße Verfahren zum Bestimmen eines Innenaufbaus eines Ersatzzahns auszuführen. Wie bereits erwähnt, kann mittels des erfindungsgemäßen Verfahrens zum Bestimmen eines Innenaufbaus eines Ersatzzahnes ein Innenaufbau für einen Ersatzzahn bestimmt werden, der dem Ersatzzahn ein äußerst naturgetreues Erscheinungsbild verleiht. Durch Nutzung eines erfindungsgemäßen Computerprogramms lässt sich dabei ein derartiger Innenaufbau für einen Ersatzzahn einfach und zuverlässig ermitteln.

Gemäß einem sechsten Aspekt der Erfindung ist ein computerlesbares Medium vorgesehen. Das computerlesbare Medium umfasst Befehle, die bei der Ausführung durch einen Computer diesen veranlassen, das erfindungsgemäße Verfahren zum Bestimmen eines Innenaufbaus eines Ersatzzahns auszuführen. Wie bereits erwähnt, kann mittels des erfindungsgemäßen Verfahrens zum Bestimmen eines Innenaufbaus eines Ersatzzahns ein Innenaufbau für einen Ersatzzahn bestimmt werden, der dem Ersatzzahn ein äußerst naturgetreues Erscheinungsbild verleiht. Durch Nutzung eines erfindungsgemäßen computerlesbaren Mediums lässt sich dabei ein derartiger Innenaufbau für einen Ersatzzahn einfach und zuverlässig ermitteln.

Es versteht sich, dass sich die vorgenannten Beispiele und Ausführungsformen unabhängig vom Aspekt der vorliegenden Erfindung, in dessen Zusammenhang sie erläutert wurden, kombinieren lassen.

Es wird darauf hingewiesen, dass vorliegend sowohl der Begriff der Opazität als auch der Begriff der Transluzenz verwendet wurde. Dabei steht der Begriff Opazität reziprok für den Begriff Transluzenz und umgekehrt. Eine hohe Opazität ist somit gleichbedeutend mit einer niedrigen Transluzenz und eine niedrige Opazität mit einer hohen Transluzenz. Eine Opazität und eine Transluzenz können ineinander umgerechnet werden.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Vorrichtung zur Datenverarbeitung mit einem erfindungsgemäßen computerlesbaren Medium und einem erfindungsgemäßen Computerprogramm, wobei die Vorrichtung zur Datenverarbeitung dazu ausgebildet ist, ein erfindungsgemäßes Verfahren zum Bestimmen eines Innenaufbaus eines Ersatzzahns auszuführen und wobei die Vorrichtung zur Datenverarbeitung mit einer Herstellungsvorrichtung gekoppelt ist, sodass sich ein erfindungsgemäßer Ersatzzahn unter Nutzung eines erfindungsgemäßen Verfahren zur Herstellung eines Ersatzzahns herstellen lässt,
- Figur 2: einen erfindungsgemäßen Ersatzzahn gemäß einem ersten Ausführungsbeispiel sowie Schritte eines ersten Ausführungsbeispiels des Verfahrens zum Bestimmen eines Innenaufbaus eines Ersatzzahns,
- Figur 3: einen erfindungsgemäßen Ersatzzahn gemäß einem zweiten Ausführungsbeispiel sowie Schritte eines zweiten Ausführungsbeispiels des Verfahrens zum Bestimmen eines Innenaufbaus eines Ersatzzahns,
- Figuren 4 bis 8: einen Innenaufbau eines erfindungsgemäßen Ersatzzahns gemäß einem dritten Ausführungsbeispiel sowie Schritte eines dritten Ausführungsbeispiels des Verfahrens zum Bestimmen eines Innenaufbaus eines Ersatzzahns,
- Figuren 9 und 10: einen Innenaufbau eines erfindungsgemäßen Ersatzzahns gemäß einem vierten Ausführungsbeispiel sowie Schritte eines vierten Ausführungsbeispiels des Verfahrens zum Bestimmen eines Innenaufbaus eines Ersatzzahns,

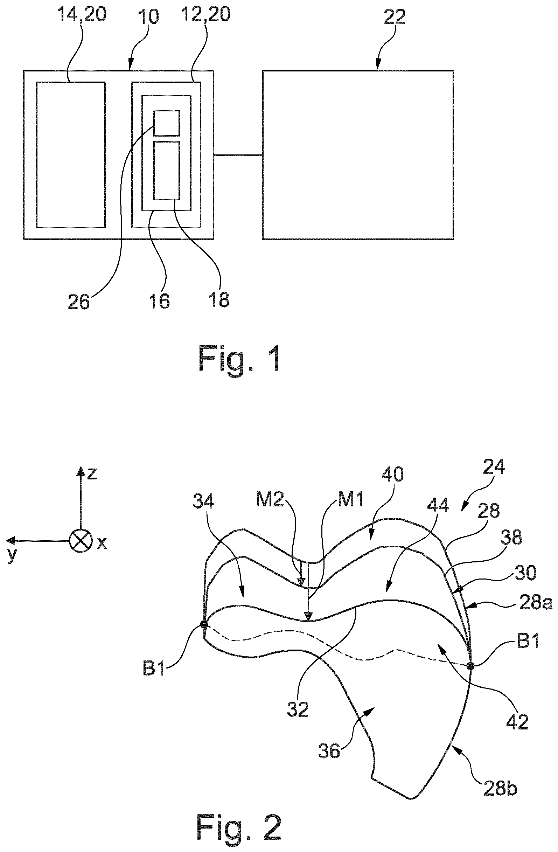

Figur 1 zeigt eine Vorrichtung 10 zur Datenverarbeitung.

Diese umfasst eine Speichereinheit 12 und eine Recheneinheit 14.

Dabei weist die Speichereinheit 12 ein computerlesbares Medium 16 auf.

Auf dem computerlesbaren Medium 16, d. h. auch auf der Speichereinheit 12, ist ein Computerprogramm 18 gespeichert.

Das Computerprogramm 18 und somit auch das computerlesbare Medium 16 umfassen Befehle, die bei der Ausführung des Computerprogramms 18 durch die Recheneinheit 14 oder, allgemeiner gesprochen, durch einen Computer, die Recheneinheit 14 oder den Computer dazu veranlassen, ein Verfahren zum Bestimmen eines Innenaufbaus eines Ersatzzahns auszuführen.

Folglich stellen die Speichereinheit 12 und die Recheneinheit 14 Mittel 20 zum Ausführen des Verfahrens zum Bestimmen eines Innenaufbaus eines Ersatzzahns dar.

Im Beispiel der Figur 1 ist die Vorrichtung 10 zur Datenverarbeitung ferner kommunikationstechnisch mit einer Herstellungsvorrichtung 22 gekoppelt. Dabei ist die Herstellungsvorrichtung 22 dazu ausgebildet, einen Ersatzzahn 24 zu produzieren, der einen Innenaufbau aufweist, welcher mittels des Verfahrens zum Bestimmen des Innenaufbaus des Ersatzzahns 24 bestimmt wurde.

Aus diesem Grund umfasst die Speichereinheit 12 im dargestellten Ausführungsbeispiel zusätzlich ein Computerprogramm 26 zum Ansteuern der Herstellungsvorrichtung 22. Mit anderen Worten umfasst das Computerprogramm 26 Befehle, die bei der Ausführung des Computerprogramms 26 durch die Recheneinheit 14 oder, allgemeiner gesprochen, durch einen Computer, die Recheneinheit 14 oder den Computer dazu veranlassen, die Herstellungsvorrichtung 22 zu steuern.

Im Beispiel der Figur 1 ist die Herstellungsvorrichtung 22 dazu ausgebildet, den Ersatzzahn 24 additiv oder generativ herzustellen. Vereinfacht gesagt kann daher die Herstellungsvorrichtung 22 als 3D-Drucker bezeichnet werden.

Figur 2 zeigt ein erstes Ausführungsbeispiel des Ersatzzahns 24. In diesem Beispiel ist der Ersatzzahn 24 dazu ausgebildet, einen Backenzahn oder Molar zu ersetzen.

Der Ersatzzahn 24 weist eine äußere Hülle 28 und einen Innenaufbau 30 auf.

Dabei wurde der Innenaufbau 30 mittels des Verfahrens zum Bestimmen des Innenaufbaus 30 des Ersatzzahns 24 bestimmt, wie im Folgenden im Detail erläutert werden wird.

Um das Verfahren mittels der Vorrichtung 10 zur Datenverarbeitung ausführen zu können und um zudem die Erläuterung des Verfahrens zu vereinfachen, wird zunächst ein zahnindividuelles Koordinatensystem definiert.

Der Ursprung dieses Koordinatensystems liegt dabei im Volumenschwerpunkt der äußeren Hülle 28 des Ersatzzahns 24.

Für die Festlegung der Richtung der X-Achse wird die Orientierung und Position des Ersatzzahns 24 im menschlichen Kiefer betrachtet. Sind mehrere Zähne am Kiefer vorhanden, kann für jeden Zahn der zugehörige Volumenschwerpunkt der äußeren Hülle ermittelt werden. Werden alle Volumenschwerpunkte aller Zähne am Kiefer verbunden, ergibt sich ein sogenannter Zahnbogen. Die X-Achse verläuft in diesem Zusammenhang tangential zum Zahnbogen.

Es versteht sich dabei, dass der Zahnbogen streng genommen lediglich dann definiert ist, wenn auch die Position und Orientierung der zum betrachteten Zahn benachbarten Zähne bekannt ist. Allerdings lässt sich für den Fachmann der relevante Abschnitt des Zahnbogens auch anhand der äußeren Hülle 28 des Ersatzzahns 24 alleine bestimmen. Das liegt daran, dass der Fachmann anhand der geometrischen Merkmale der äußeren Hülle 28 auf eine Orientierung und Anordnung des Zahns am Kiefer zurückschließen kann.

Die Z-Achse verläuft senkrecht zur X-Achse und ist in Richtung Okklusion orientiert. Das bedeutet, dass die Z-Achse in Richtung Zahnspitze oder in Richtung weg von der Zahnwurzel zeigt.

Die Y-Achse steht sowohl auf der X-Achse als auch auf der Z-Achse senkrecht und ist in Richtung zur Zunge oder zum Gaumen positiv.

Auch wenn der Ursprung dieses Koordinatensystems im Volumenschwerpunkt der äußeren Hülle 28 liegt, werden in den Figuren die Koordinatensysteme der besseren Übersichtlichkeit wegen stets außerhalb des zugehörigen Ersatzzahns 24 dargestellt.

In einem ersten Schritt S1 des Verfahrens zum Bestimmen des Innenaufbaus 30 des Ersatzzahns 24 werden Außenhülledaten erhalten, die die äußere Hülle 28 des Ersatzzahns 24 beschreiben.

Im dargestellten Ausführungsbeispiel werden die Außenhülledaten von einer sogenannten Zahnbibliothek erhalten, in der eine Vielzahl von Außenhülledaten für unterschiedliche Ersatzzähne 24 gespeichert sind. Dabei sind die Außenhülledaten für jeweils einen Ersatzzahn 24 in einer separaten Datei gespeichert, die auch als Volumendatei bezeichnet werden kann.

Die Zahnbibliothek ist auf der Speichereinheit 12 hinterlegt.

Mit anderen Worten werden die Außenhülledaten von der Zahnbibliothek auf der Speichereinheit 12 erhalten. Dabei enthalten die Außenhülledaten auch sogenannte Metadaten, die im dargestellten Beispiel eine Zahntypinformation umfassen, die einen Zahntyp des Ersatzzahns 24 beschreibt.

Vorliegend handelt es sich beim Zahntyp um einen Molar oder Backenzahn.

Es wird betont, dass die Außenhülledaten keinerlei Informationen zum Innenaufbau 30 des Ersatzzahns 24 enthalten.

In einem zweiten Schritt S2 wird eine erste Bezugsgeometrieinformation definiert, die eine erste Bezugsgeometrie B1 beschreibt. Die erste Bezugsgeometrie B1 teilt die äußere Hülle 28 virtuell in einen ersten Hüllenabschnitt 28a und in einen zweiten Hüllenabschnitt 28b.

Im Beispiel aus Figur 2 ist die erste Bezugsgeometrie B1 eine sogenannte Äquatorlinie. Dabei ist die Verwendung der Äquatorlinie als erste Bezugsgeometrie B1 mit dem Zahntyp, der vorliegend Molar ist, verknüpft. Mit anderen Worten wird die Bezugsgeometrie B1 in Abhängigkeit des Zahntyps gewählt.

Nachfolgend, in einem dritten Schritt S3, wird eine erste Stauchungshülle 32 definiert.

Das erfolgt dadurch, dass der erste Hüllenabschnitt 28a in Richtung zur ersten Bezugsgeometrie B1 entgegen der von der positiven Z-Achse definierten Richtung, d. h. in negativer Z-Richtung, um ein erstes Stauchungsmaß M1 gestaucht wird. Dabei stellt die erste Bezugsgeometrie B1 eine Stauchungsbasis dar, die unbeweglich ist. Auch der zweite Hüllenabschnitt 28b bleibt unverändert.

Dabei ist das erste Stauchungsmaß M1 ebenfalls in Abhängigkeit des Zahntyps, d. h. für Molaren, festgelegt. Ein Stauchungsmaß gibt in diesem Zusammenhang an, wie stark die virtuelle Stauchung ist. Das Stauchungsmaß kann absolut oder relativ, z. B. prozentual, d.h. im Verhältnis zu einer Höhe oder Breite des Zahns, angegeben werden.

Folglich lassen sich auf Basis des ersten Hüllenabschnitts 28a, des zweiten Hüllenabschnitts 28b und der ersten Stauchungshülle 32 in einem vierten Schritt S4 ein erstes Subvolumen 34 und ein zweites Subvolumen 36 ableiten.

Dabei wird das erste Subvolumen 34 durch die erste Stauchungshülle 32 und den ersten Hüllenabschnitt 28a der äußeren Hülle 28 begrenzt.

Das zweite Subvolumen 36 wird von der Stauchungshülle und vom zweiten Hüllenabschnitt 28b der äußeren Hülle 28 begrenzt.

Ferner wird in einem fünften Schritt S5 eine zweite Stauchungshülle 38 generiert.

Hierfür wird wieder die erste Bezugsgeometrie B1 verwendet und der erste Hüllenabschnitt 28a wird entlang der negativen Z-Richtung zur ersten Bezugsgeometrie B1 hin virtuell gestaucht.

Nunmehr wird ein zweites Stauchungsmaß M2 verwendet, das im dargestellten Beispiel kleiner ist als das erste Stauchungsmaß M1.

Dabei ist auch das zweite Stauchungsmaß M2 in Abhängigkeit des Zahntyps, d. h. für Molaren, festgelegt.

Es lassen sich folglich in einem sechsten Schritt S6 wieder Subvolumina ableiten.

Dabei wird ein drittes Subvolumen 40 von der zweiten Stauchungshülle 38 und vom ersten Hüllenabschnitt 28a begrenzt.

Ein viertes Subvolumen 42 wird von der zweiten Stauchungshülle 38 und vom zweiten Hüllenabschnitt 28b begrenzt.

Ein fünftes Subvolumen 44 wird von der zweiten Stauchungshülle 38 und von der ersten Stauchungshülle 32 begrenzt.

Nachfolgend wird in einem siebten Schritt S7 jedem der Subvolumina eine Anatomieinformation, eine Materialinformation, eine Farbinformation, und eine Transluzenzinformation zugeordnet. Das bedeutet, dass jedem aus erstem Subvolumen 34, zweitem Subvolumen 36, drittem Subvolumen 40, viertem Subvolumen 42 und fünftem Subvolumen 44 eine Anatomieinformation, eine Materialinformation, eine Farbinformation, und eine Transluzenzinformation zugeordnet wird.

Es versteht sich dabei, dass die definierten Subvolumina nicht überlappungsfrei sind und jedem Volumenelement des Ersatzzahns 24 lediglich eine einzige Anatomieinformation, eine einzige Materialinformation, eine einzige Farbinformation und eine einzige Transluzenzinformation zugeordnet werden kann.

Im dargestellten Beispiel wird dem dritten Subvolumen 40 die Anatomieinformation Zahnschneide zugeordnet. Das bedeutet, dass das dritte Subvolumen 40 eine Zahnschneide nachbilden soll. Dementsprechend wird dem dritten Subvolumen 40 ein Zahnschneidenmaterial zugeordnet, eine Zahnschneidenfarbe und eine Zahnschneidentransluzenz.

In dargestellten Beispiel hat das dritte Subvolumen 40 eine Dicke von ca. 0,5 mm bis ca. 2,5 mm, wobei die Dicke entlang der z-Achse gemessen ist.

In diesem Zusammenhang kann das Zahnschneidenmaterial eine Zirkonoxid-Keramik sein, die einen vergleichsweise hohen Yttrium-Anteil aufweist.

Die Zahnschneidenfarbe ist z. B. weiß oder gelbbraun oder eine Mischung aus weiß und gelbbraun.

Die Zahnschneidentransluzenz ist bevorzugt hoch.

Alternativ kann als Zahnschneidenmaterial ein gefüllter Photopolymer auf Basis von Methacrylaten und/oder Acrylaten verwendet werden.

In diesem Zusammenhang kann für die Zahnschneide eine Mischung aus einem Polymer mit heller Zahnfarbe und niedriger Opazität, z. B. 55%, und einem Polymer mit dunkler Zahnfarbe und hoher Opazität, z. B. 85%, eingesetzt werden. Dabei ist der Mischungsanteil des Polymers mit heller Zahnfarbe sehr viel größer als der Mischungsanteil des Polymers mit dunkler Zahnfarbe.

Dem fünften Subvolumen 44 wird die Anatomieinformation Dentinkern zugeordnet. D. h., dass das fünfte Subvolumen 44 einen Dentinkern nachbilden soll. Dementsprechend wird dem fünften Subvolumen 44 ein Dentinkernmaterial zugeordnet, eine Dentinkernfarbe zugeordnet und eine Dentinkerntransluzenz zugeordnet.

In diesem Zusammenhang kann das Dentinkernmaterial eine Zirkonoxid-Keramik sein, die einen niedrigen oder mittleren Yttrium-Anteil aufweist. Dabei ist der Yttrium-Anteil des Dentinkernmaterials niedriger als der Yttrium-Anteil des Zahnschneidenmaterials.

Die Dentinkernfarbe betrifft z. B. eine Mischung aus weiß, pink, grau, gelb und gelbbraun.

Die Dentinkerntransluzenz ist bevorzug niedrig, insbesondere niedriger als die Zahnschneidentransluzenz.

Alternativ kann als Dentinkernmaterial ein gefüllter Photopolymer auf Basis von Methacrylaten und/oder Acrylaten verwendet werden.

In diesem Zusammenhang kann für den Dentinkern eine Mischung aus einem Polymer mit heller Zahnfarbe und hoher Opazität, z. B. 85%, und einem Polymer mit dunkler Zahnfarbe und hoher Opazität, z. B. 85%, eingesetzt werden.

Ferner wird dem zweiten Subvolumen 36 die Anatomieinformation Zahnhals zugeordnet. Dementsprechend soll das zweite Subvolumen 36 einen Zahnhals nachbilden.

Daher wird dem zweiten Subvolumen 36 ein Zahnhalsmaterial zugeordnet, eine Zahnhalsfarbe zugeordnet und eine Zahnhalstransluzenz zugeordnet.

In diesem Zusammenhang kann das Zahnhalsmaterial eine Zirkonoxid-Keramik sein, die einen niedrigen oder mittleren Yttrium-Anteil aufweist. Dabei ist der Yttrium-Anteil des Zahnhalsmaterials niedriger als der Yttrium-Anteil des Dentinkernmaterials und folglich auch niedriger als der Yttrium-Anteil des Zahnschneidenmaterials.

Die Zahnhalsfarbe betrifft z. B. eine Mischung aus weiß, pink, grau, gelb und gelbbraun. Dabei ist die Zahnhalsfarbe jedoch dunkler als die Dentinkernfarbe.

Die Zahnhalstransluzenz ist bevorzug niedrig, insbesondere niedriger als die Dentinkerntransluzenz.

Alternativ kann als Zahnhalsmaterial ein gefüllter Photopolymer auf Basis von Methacrylaten und/oder Acrylaten verwendet werden.

In diesem Zusammenhang kann für den Zahnhals eine Mischung aus einem Polymer mit heller Zahnfarbe und hoher Opazität, z. B. 85%, und einem Polymer mit dunkler Zahnfarbe und hoher Opazität, z. B. 85%, eingesetzt werden. Dabei ist der Mischungsanteil des Polymers mit heller Zahnfarbe niedriger als beim Dentinkern und der Mischungsanteil des Polymers mit dunkler Zahnfarbe höher als beim Dentinkern.

Vereinfacht gesagt lassen sich also mittels des Verfahrens zum bestimmen des Innenaufbaus 30 des Ersatzzahns 24 innerhalb einer äußeren Hülle 28 des Ersatzzahns Subvolumina festlegen, die jeweils zur Nachbildung eines anatomischen Abschnitts eines Zahns gedacht sind.

Grundsätzlich ist es dabei denkbar, dass sich das zweite Subvolumen 36, das dritte Subvolumen 40 und das fünfte Subvolumen 44 sowohl hinsichtlich ihres Materials, als auch ihrer Farbe als auch ihrer Transluzenz unterscheiden.

Es lassen sich somit das Material, die Farbe und die Transluzenz für jedes aus zweitem Subvolumen 36, drittem Subvolumen 40 und fünftem Subvolumen 44 wählen, sodass sich für den Ersatzzahns 24 ein naturgetreues Erscheinungsbild gibt.

In einem achten Schritt S8 wird folglich eine Innenaufbauinformation bereitgestellt, die für jedes der Subvolumina, zumindest jedoch für das zweite Subvolumen 36, das dritte Subvolumen 40 und das fünfte Subvolumen 44, eine Geometrie und Lage beschreibt.

Im dargestellten Ausführungsbeispiel wird die Innenaufbauinformation für das Computerprogramm 36 bereitgestellt, das der Ansteuerung der Herstellungsvorrichtung 22 dient. Folglich lässt sich mittels der Herstellungsvorrichtung 22 der Ersatzzahn 24 mit dem mittels des Verfahrens definierten Innenaufbau 30 herstellen.

Zusammenfassend kann daher auch von einem Verfahren zur Herstellung des Ersatzzahns 24 mit der vorgegebenen äußeren Hülle 28 gesprochen werden. Dabei umfasst das Verfahren zur Herstellung einerseits das Bestimmen des Innenaufbaus 30 des Ersatzzahns 24 mit wenigstens einem Subvolumen mittels des erläuterten Verfahrens. Andererseits umfasst das Verfahren zur Herstellung das Fertigen des Ersatzzahns 24 mit dem bestimmten Innenaufbau 30 mittels Werkstoffen, die sich in wenigstens einem ausgewählt aus Material, Farbe und Transluzenz unterscheiden. Vorliegend werden das Zahnschneidenmaterial, das Dentinkernmaterial und das Zahnhalsmaterial verwendet.

Im Detail werden mittels des Computerprogramms 36 den Ersatzzahn 24 beschreibende Schichtdaten generiert. Der Ersatzzahn 24 wird also virtuell in Schichten geschnitten, die beispielsweise senkrecht zur Z-Richtung orientiert sind.

Dabei kann jede Schicht einen oder mehrere Abschnitte aus einem oder mehreren aus zweitem Subvolumen 36, drittem Subvolumen 40 und fünftem Subvolumen 44 umfassen.

Es muss also in jeder Schicht jedem dieser Abschnitte eine Materialinformation, eine Farbinformation und eine Transluzenzinformation zugeordnet werden.

Diese Daten werden für die Herstellungsvorrichtung 22 bereitgestellt.

Zwei beispielhafte Datenformate zur Bereitstellung dieser Informationen sind das 3MF-Format und das OBJ-Format.

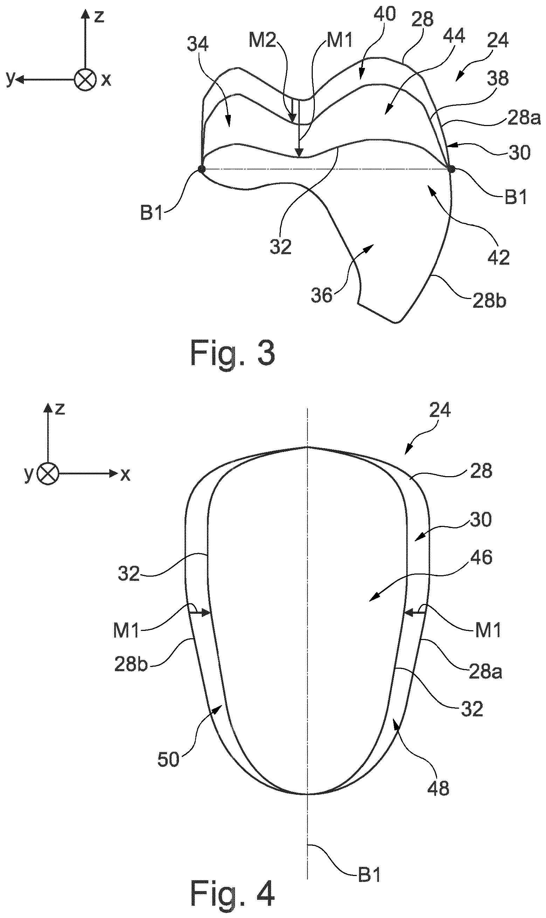

Figur 3 zeigt ein zweites Ausführungsbeispiel des Ersatzzahns 24. Wie gehabt weist der Ersatzzahn 24 eine äußere Hülle 28 und einen Innenaufbau 30 auf.

Auch in diesem Beispiel ist der Ersatzzahn 24 dazu ausgebildet, einen Backenzahn oder Molar zu ersetzen.

Dabei wurde der Innenaufbau 30 mittels eines zweiten Ausführungsbeispiels des Verfahrens zum Bestimmen des Innenaufbaus 30 des Ersatzzahns 24 bestimmt. Dabei wird im Folgenden lediglich auf die Unterschiede gegenüber dem ersten Ausführungsbeispiel des Verfahrens zum Bestimmen des Innenaufbaus 30 des Ersatzzahns 24 eingegangen.

Der Unterschied liegt in der ersten Bezugsgeometrie B1, die als Stauchungsbasis verwendet wird.

Während im ersten Ausführungsbeispiel die erste Bezugsgeometrie B1 durch die Äquatorlinie definiert wird, wird die erste Bezugsgeometrie B1 im zweiten Ausführungsbeispiel gemäß Figur 3 durch eine Ebene gebildet, die parallel zur X-Y-Ebene verläuft und denjenigen Punkt der Äquatorlinie umfasst, der die höchste, horizontal verlaufende Tangente aufweist. Dabei bedeutet ein horizontaler Verlauf ein Verlauf parallel zur X-Y-Ebene. Die Höhe wird entlang der Z-Achse gemessen.

Im Übrigen kann auf die Erläuterungen zum ersten Ausführungsbeispiel verwiesen werden.

Die Figuren 4 bis 8 zeigen ein drittes Ausführungsbeispiel des Ersatzzahns 24. In diesem Beispiel ist der Ersatzzahn 24 dazu ausgebildet, einen Frontzahn, also einen Schneidezahn oder einen Eckzahn, zu ersetzen.

Wie gehabt weist der Ersatzzahn 24 eine äußere Hülle 28 und einen Innenaufbau 30 auf.

Darüber hinaus wird das oben definierte, zahnindividuelle Koordinatensystem verwendet.

Auch wenn der Ursprung dieses Koordinatensystems im Volumenschwerpunkt der äußeren Hülle 28 liegt, werden wieder in den Figuren die Koordinatensysteme der besseren Übersichtlichkeit wegen stets außerhalb des zugehörigen Ersatzzahns 24 dargestellt.

Wie in den bereits erläuterten Beispielen werden in einem ersten Schritt S1 Außenhülledaten erhalten, die die äußere Hülle 28 des Ersatzzahns 24 beschreiben.

Dabei werden auch im dritten Ausführungsbeispiel die Außenhülledaten von der Zahnbibliothek erhalten, die auf der Speichereinheit 12 hinterlegt ist. Die Außenhülledaten umfassen auch wieder sogenannte Metadaten, die eine Zahntypinformation umfassen, die einen Zahntyp des Ersatzzahns 24 beschreibt.

Vorliegend handelt es sich beim Zahntyp um einen Frontzahn. Der Zahntyp betrifft also einen Schneidezahn oder einen Eckzahn.

Im zweiten Schritt S2 wird wieder eine erste Bezugsgeometrieinformation definiert, die eine erste Bezugsgeometrie B1 beschreibt. Die Bezugsgeometrie teilt die äußere Hülle 28 virtuell in einen ersten Hüllenabschnitt 28a und in einen zweiten Hüllenabschnitt 28b.

Dabei wird im dritten Ausführungsbeispiel die erste Bezugsgeometrie B1 durch eine Ebene definiert, die durch die Y-Z-Ebene gebildet ist.

Diese Ebene umfasst also auch den Volumenschwerpunkt des Ersatzzahns, d. h. den Volumenschwerpunkt der äußeren Hülle 28. Dabei entspricht der Volumenschwerpunkt dem Massenschwerpunkt, wenn von einer uniformen Massenverteilung ausgegangen wird.

Im dritten Schritt S3 wird nun die erste Stauchungshülle 32 durch beidseitiges Stauchen definiert. Dabei wird das beidseitige Stauchen nachfolgend als ein einziger Schritt erläutert. Streng genommen handelt sich dabei jedoch um zwei Unter-Schritte.

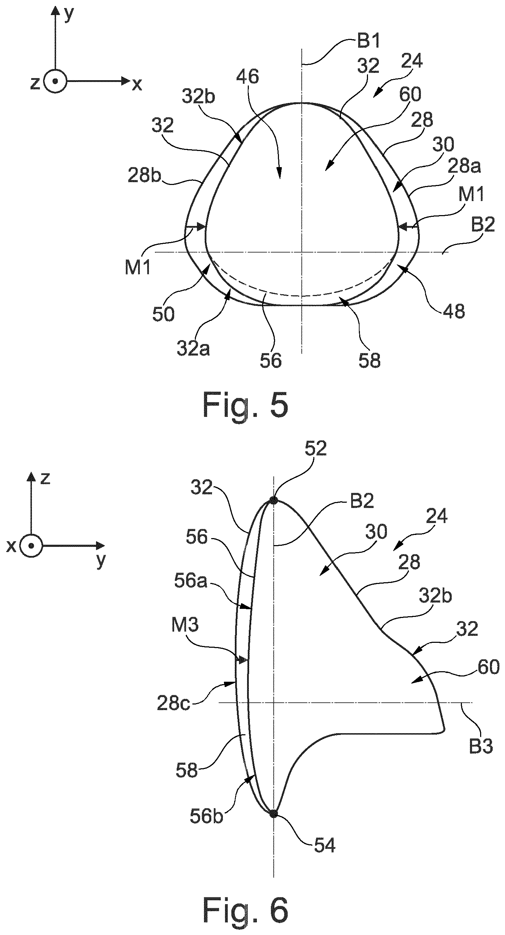

Das bedeutet, dass der in der Figur 4 und in der Figur 5 rechts dargestellte erste Hüllenabschnitt 28a entgegen der positiven Richtung der X-Achse in Richtung zur ersten Bezugsgeometrie B1 gestaucht wird.

Zudem wird der in der Figur 4 und in der Figur 5 links dargestellte zweite Hüllenabschnitt 28b entlang der positiven X-Achse in zur ersten Bezugsgeometrie B1 gestaucht.

Beide Stauchungen verwenden das erste Stauchungsmaß M1, das wieder in Abhängigkeit des Zahntyps, d. h. hier für Frontzähne, festgelegt ist.

Folglich lassen sich auf Basis des ersten Hüllenabschnitts 28a, des zweiten Hüllenabschnitts 28b und der ersten Stauchungshülle 32 im vierten Schritt S4 ein sechstes Subvolumen 46, ein siebtes Subvolumen 48 und ein achtes Subvolumen 50 ableiten.

Es versteht sich, dass die Bezeichnungen der Subvolumina als sechstes Subvolumen 46, siebentes Subvolumen 48 und achtes Subvolumen 50 lediglich der einfacheren Erläuterungen dienen. Eine Anzahl an Subvolumina ist mit diesen Bezeichnungen nicht impliziert.

Das sechste Subvolumen 46 wird dabei allseitig durch die erste Stauchungshülle 32 begrenzt.

Das siebte Subvolumen 48 wird von der ersten Stauchungshülle 32 und vom ersten Hüllenabschnitt 28a der äußeren Hülle 28 begrenzt.

Das achte Subvolumen 50 wird von der ersten Stauchungshülle 32 und vom zweiten Hüllenabschnitt 28b der äußeren Hülle 28 begrenzt.

In einem nachfolgenden fünften Schritt S5 wird nun eine zweite Bezugsgeometrieinformation definiert, die eine zweite Bezugsgeometrie B2 beschreibt, welche von der ersten Bezugsgeometrie B1 verschieden ist.

Die zweite Bezugsgeometrie B2 unterteilt die äußere Hülle 28 des Ersatzzahns 24 virtuell in einen dritten Hüllenabschnitt 28c und einen vierten Hüllenabschnitt 28d.

Zudem teilt die zweite Bezugsgeometrie B2 die erste Stauchungshülle 32 in einen ersten Stauchungshüllenabschnitt 32a und einen zweiten Stauchungshüllenabschnitt 32b (siehe insbesondere Figur 5).

Dabei betrifft die zweite Bezugsgeometrie B2 eine Ebene, die planparallel zur X-Achse verläuft und dabei einen obersten Punkt 52 der äußeren Hülle 28 des Ersatzzahns 24 sowie einen untersten Punkt 54 der äußeren Hülle 28 des Ersatzzahns 24 umfasst (siehe insbesondere Figur 6).

Basierend hierauf wird in einem sechsten Schritt S6 eine dritte Stauchungshülle 56 durch virtuelles Stauchen des ersten Stauchungshüllenabschnitts 32a der ersten Stauchungshülle 32 in Richtung zur zweiten Bezugsgeometrie B2 definiert. Dabei wird ein drittes Stauchungsmaß M3 verwendet (siehe Figur 6).

Der zweite Stauchungshüllenabschnitt 32b und die zweite Bezugsgeometrie B2 stehen dabei fest.

Die Stauchung erfolgt also entlang einer positiven Richtung der Y-Achse.

Optional wäre es auch im Rahmen des sechsten Schrittes S6 möglich, den zweiten Stauchungshüllenabschnitt 32b in Richtung zur zweiten Bezugsgeometrie B2 virtuell zu stauchen. Dies ist in den Figuren jedoch nicht dargestellt.

Folglich lassen sich in einem siebten Schritt auf Basis des ersten Stauchungshüllenabschnitts 32a, des zweiten Stauchungshüllenabschnitts 32b und der dritten Stauchungshülle 56 ein neuntes Subvolumen 58 und ein zehntes Subvolumen 60 ableiten.

Dabei ist das neunte Subvolumen 58 durch den ersten Stauchungshüllenabschnitt 32a und die dritte Stauchungshülle 56 begrenzt.

Das zehnte Subvolumen 60 ist durch den zweiten Stauchungshüllenabschnitt 32b und die dritte Stauchungshülle 56 begrenzt.

Zur besseren Illustration ist in diesem Zusammenhang die dritte Stauchungshülle 56 mit einer gestrichelten Linie in Figur 5 eingezeichnet, obwohl in der Darstellung gemäß Figur 5 eigentlich noch keine Stauchung der ersten Stauchungshülle 32 stattgefunden hat.

In einem nachfolgenden achten Schritt S8 wird eine dritte Bezugsgeometrieinformation definiert, die eine dritte Bezugsgeometrie B3 beschreibt, welche von der ersten Bezugsgeometrie B1 und der zweiten Bezugsgeometrie B2 verschieden ist.

Die dritte Bezugsgeometrie B3 unterteilt die äußere Hülle 28 des Ersatzzahns 24 virtuell in einen fünften Hüllenabschnitt 28e und einen sechsten Hüllenabschnitt 28f.

Ferner unterteilt die dritte Bezugsgeometrie B3 die dritte Stauchungshülle 56 in einen ersten Stauchungshüllenabschnitt 56a und einen zweiten Stauchungshüllenabschnitt 56b. Ebenfalls wird der zweite Stauchungshüllenabschnitt 32b in zwei Teile geteilt.

Mit anderen Worten unterteilt die dritte Bezugsgeometrie B3 das zehnte Subvolumen 60 in zwei Teile.

Dabei betrifft die dritte Bezugsgeometrie B3 eine Ebene, die parallel zur X-Y-Ebene verläuft und dabei einen größten Umfang der äußeren Hülle 28 um die Z-Achse umfasst.

In einer nicht näher dargestellten Alternative kann alternativ eine Äquatorlinie als dritte Bezugsgeometrie B3 verwendet werden.

Basierend hierauf wird in einem neunten Schritt S9 eine vierte Stauchungshülle 62 durch virtuelles Stauchen des ersten Stauchungshüllenabschnitts 56a der dritten Stauchungshülle und des in der Figur 6 oberhalb der dritten Bezugsgeometrie liegenden Abschnitts der ersten Stauchungshülle 32 definiert.

Die Stauchung erfolgt also entlang einer negativen Richtung der Z-Achse.

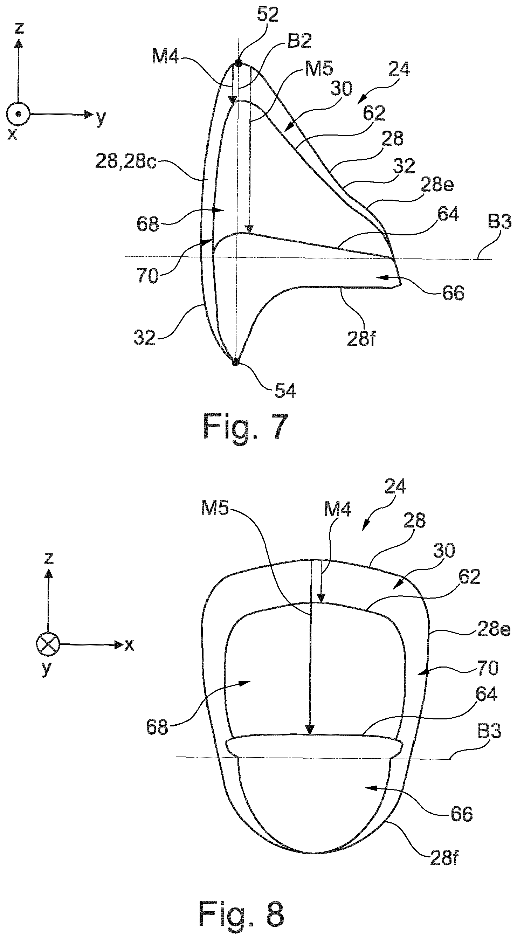

Dabei wird ein viertes Stauchungsmaß M4 verwendet (siehe insbesondere Figuren 7 und 8).

Danach wird in einem zehnten Schritt S9 eine fünfte Stauchungshülle 64 durch virtuelles Stauchen des ersten Stauchungshüllenabschnitts 56a der dritten Stauchungshülle und des in der Figur 6 oberhalb der dritten Bezugsgeometrie liegenden Abschnitts der ersten Stauchungshülle 32 definiert. Im Unterschied zu vorher wird jedoch ein fünftes Stauchungsmaß M5 verwendet, das größer ist als das vierte Stauchungsmaß M4.

Diese Stauchung erfolgt also ebenfalls entlang einer negativen Richtung der Z-Achse.

Es lässt sich somit ein elftes Subvolumen 66 ableiten, das durch die fünfte Stauchungshülle 64 sowie durch die unterhalb der dritten Bezugsgeometrie liegenden Abschnitte der ersten Stauchungshülle 32 begrenzt ist.

Ferner lässt sich ein zwölftes Subvolumen 68 ableiten, das durch die fünfte Stauchungshülle 64 und die vierte Stauchungshülle 62 begrenzt ist.

Außerdem kann ein dreizehntes Subvolumen 70 abgeleitet werden, das als Differenz eines von der äußeren Hülle 28 eingeschlossenen Volumens und dem elften Subvolumen 66 sowie dem zwölften Subvolumen 68 definiert ist. Mit anderen Worten bilden diejenigen Abschnitte des von der äußeren Hülle 28 eingeschlossenen Volumens, die weder zum elften Subvolumen 66 noch zum zwölften Subvolumen 68 gehören, das dreizehnte Subvolumen 70.

Nachfolgend wird in einem elften Schritt S11, wie bereits erläutert, jedem der Subvolumina eine Anatomieinformation, eine Materialinformation, eine Farbinformation, und eine Transluzenzinformation zugeordnet.

Im dargestellten Beispiel wird dem dreizehnten Subvolumen 70 die Anatomieinformation Zahnschneide zugeordnet. Das bedeutet, dass das dreizehnten Subvolumen 70 eine Zahnschneide nachbilden soll. Dementsprechend wird dem dreizehnten Subvolumen 70 ein Zahnschneidenmaterial zugeordnet, eine Zahnschneidenfarbe und eine Zahnschneidentransluzenz.

Dem zwölften Subvolumen 68 wird die Anatomieinformation Dentinkern zugeordnet. D. h., dass das zwölften Subvolumen 68 einen Dentinkern nachbilden soll. Dementsprechend wird dem zwölften Subvolumen 68 ein Dentinkernmaterial zugeordnet, eine Dentinkernfarbe zugeordnet und eine Dentinkerntransluzenz zugeordnet.

Ferner wird dem elften Subvolumen 66 die Anatomieinformation Zahnhals zugeordnet. Dementsprechend soll das elfte Subvolumen elften einen Zahnhals nachbilden. Daher wird dem elften Subvolumen 66 ein Zahnhalsmaterial zugeordnet, eine Zahnhalsfarbe zugeordnet und eine Zahnhalstransluzenz zugeordnet.

Vereinfacht gesagt lassen sich also mittels des Verfahrens zum bestimmen des Innenaufbaus 30 des Ersatzzahns 24 innerhalb einer äußeren Hülle 28 des Ersatzzahns Subvolumina festlegen, die jeweils zur Nachbildung eines anatomischen Abschnitts eines Zahns gedacht sind.

Grundsätzlich ist es dabei denkbar, dass sich das elfte Subvolumen 66, das zwölfte Subvolumen 68 und das dreizehnte Subvolumen 70 sowohl hinsichtlich ihres Materials, als auch ihrer Farbe als auch ihrer Transluzenz unterscheiden.

Es lassen sich somit das Material, die Farbe und die Transluzenz für jedes aus elftem Subvolumen 66, zwölftem Subvolumen 68 und dreizehntem Subvolumen 70 wählen, sodass sich für den Ersatzzahns 24 ein naturgetreues Erscheinungsbild gibt.

Hinsichtlich des Bereitstellens der Innenaufbauinformation und hinsichtlich des Verfahrens zur Herstellung des Ersatzzahns kann auf die Erläuterungen zu den vorhergehenden Beispielen verwiesen werden.

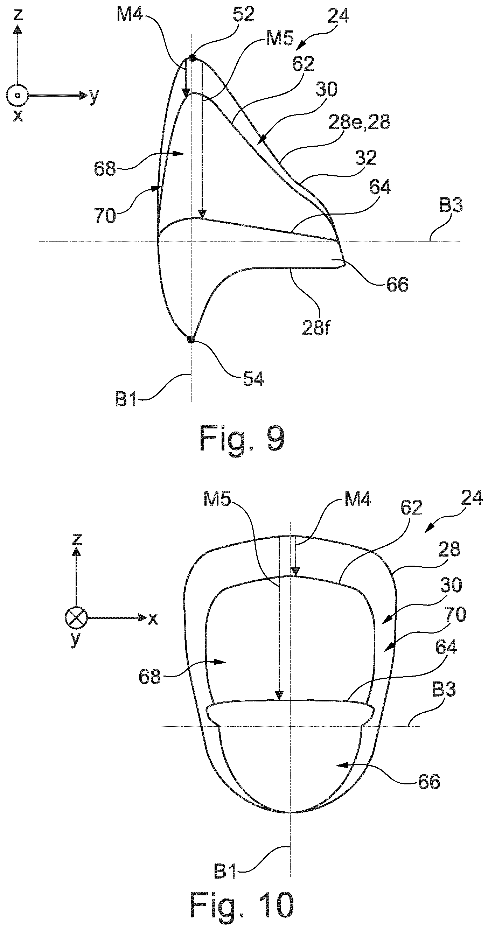

Die Figuren 9 und 10 zeigen ein viertes Ausführungsbeispiel des Ersatzzahns 24.

Wieder ist der Ersatzzahn 24 dazu ausgebildet, einen Frontzahn, also einen Schneidezahn oder einen Eckzahn, zu ersetzen.

Wie gehabt weist der Ersatzzahn 24 eine äußere Hülle 28 und einen Innenaufbau 30 auf.

Darüber hinaus wird das oben definierte, zahnindividuelle Koordinatensystem verwendet.

Auch wenn der Ursprung dieses Koordinatensystems im Volumenschwerpunkt der äußeren Hülle 28 liegt, werden wieder in den Figuren die Koordinatensysteme der besseren Übersichtlichkeit wegen stets außerhalb des zugehörigen Ersatzzahns 24 dargestellt.

Wie in den bereits erläuterten Beispielen werden in einem ersten Schritt S1 Außenhülledaten erhalten, die die äußere Hülle 28 des Ersatzzahns 24 beschreiben.

Dabei werden auch im vierten Ausführungsbeispiel die Außenhülledaten von der Zahnbibliothek erhalten, die auf der Speichereinheit 12 hinterlegt ist. Die Außenhülledaten umfassen auch wieder sogenannte Metadaten, die eine Zahntypinformation umfassen, die einen Zahntyp des Ersatzzahns 24 beschreibt.

Vorliegend handelt es sich beim Zahntyp wieder um einen Frontzahn. Der Zahntyp betrifft also einen Schneidezahn oder einen Eckzahn. Im dargestellten Ausführungsbeispiel gleicht der Ersatzzahn gemäß dem vierten Ausführungsbeispiel hinsichtlich seiner äußeren Hülle 28 dem Ersatzzahn gemäß dem dritten Ausführungsbeispiel.

Im zweiten Schritt S2 wird wieder eine erste Bezugsgeometrie B1 definiert und im dritten Schritt S3 eine virtuelle Stauchung vorgenommen. Diese Schritte entsprechen dem zweiten Schritt S2 und dem dritten Schritt S3 gemäß dem dritten Ausführungsbeispiel, das bereits anhand der Figuren 4 bis 8 erläutert wurde. Insbesondere kann in diesem Zusammenhang auf die Figuren 4 und 5 verwiesen werden.

Verglichen mit dem dritten Ausführungsbeispiel findet dann jedoch keine Stauchung unter Nutzung der zweiten Bezugsgeometrie B2 statt. Im vierten Ausführungsbeispiel entfallen diese Schritte.

Die nachfolgenden Schritte des vierten Ausführungsbeispiels entsprechen dann wieder dem dritten Ausführungsbeispiel.

In einer fünften, vereinfachten Ausführungsform werden wie gehabt in einem ersten Schritt S1 Außenhülledaten erhalten.

Im zweiten Schritt S2 wird zur Definition von wenigstens einer ersten Bezugsgeometrie B1 eine Bounding Box um die äußere Hülle 28 gelegt. Die Bounding Box kann zwei parallele Grenzflächen, die parallel zur X-Y-Ebene verlaufen, zwei parallele Grenzflächen, die parallel zur X-Z-Ebene verlaufen und zwei parallele Grenzflächen, die parallel zur Y-Z-Ebene verlaufen, aufweisen.

Bei den nachfolgenden virtuellen Stauchungen können eine oder mehrere der Grenzflächen als Bezugsgeometrie verwendet werden. Dabei können, wie bereits erläutert, auch mehrere virtuelle Stauchungen unter Nutzung derselben Bezugsgeometrie, d.h. derselben Grenzfläche ausgeführt werden, wobei jedoch verschiedene Stauchungsmaße verwendet werden.

In diesem Zusammenhang kann es passieren, dass ein Teil des gestauchten Abschnitts der äußeren Hülle die originäre äußere Hülle nach außen durchdringt.

Das ist nicht gewünscht, sodass derartige Abschnitte von Stauchungshüllen, die auch als extrudierende Abschnitte bezeichnet werden, ignoriert werden.

In den vorliegenden Ausführungsbeispielen wurden stets fest vorgegebene Stauchungsmaße M1, M2, M3, M4, M5 verwendet. Das ist vorteilhaft, da die virtuellen Stauchungen so vollständig automatisiert vorgenommen werden können. In diesem Zusammenhang können die Stauchungsmaße M1, M2, M3, M4, M5 beispielsweise für bestimmte Zahntypen oder Zahngruppen fest vorgegeben werden. Auch können die Stauchungsmaße M1, M2, M3, M4, M5 in Abhängigkeit von äußeren Abmessungen der äußeren Hülle 28 festgelegt werden. Dabei können die äußeren Abmessungen beispielsweise durch eine sogenannte Bounding Box beschrieben werden. Das bedeutet, dass virtuell ein Quader um die äußere Hülle 28 gelegt wird, der gerade so groß ist, dass die äußere Hülle 28 darin Platz findet. Dabei sind die Kanten der Bounding Box parallel zu den Achsen des zahnindividuellen Koordinatensystems orientiert.

Optional kann jedoch zusätzlich eine Möglichkeit vorgesehen sein, dass ein Nutzer der Vorrichtung 10 zur Datenverarbeitung eines oder mehrere der Stauchungsmaße M1, M2, M3, M4, M5 manuell eingeben und/oder ändern kann. Auf diese Weise kann der Nutzer die abgeleiteten Subvolumina gezielt beeinflussen.

### Bezugszeichenliste

- 10: Vorrichtung zur Datenverarbeitung
- 12: Speichereinheit
- 14: Recheneinheit
- 16: computerlesbares Medium
- 18: Computerprogramm
- 20: Mittel zum Ausführen eines Verfahrens zum Bestimmen eines Innenaufbaus eines Ersatzzahns
- 22: Herstellungsvorrichtung
- 24: Ersatzzahn
- 26: Computerprogramm
- 28: äußere Hülle
- 28a: erster Hüllenabschnitt
- 28b: zweiter Hüllenabschnitt
- 28c: dritter Hüllenabschnitt
- 28d: vierter Hüllenabschnitt
- 28e: fünfter Hüllenabschnitt
- 28f: sechster Hüllenabschnitt
- 30: Innenaufbau
- 32: erste Stauchungshülle
- 32a: erster Stauchungshüllenabschnitt
- 32b: zweiter Stauchungshüllenabschnitt
- 34: erstes Subvolumen
- 36: zweites Subvolumen
- 38: zweite Stauchungshülle
- 40: drittes Subvolumen
- 42: viertes Subvolumen
- 44: fünftes Subvolumen
- 46: sechstes Subvolumen
- 48: siebtest Subvolumen
- 50: achtes Subvolumen
- 52: oberster Punkt
- 54: unterster Punkt
- 56: dritte Stauchungshülle
- 58: neuntes Subvolumen
- 60: zehntes Subvolumen
- 62: vierte Stauchungshülle
- 64: fünfte Stauchungshülle
- 66: elftes Subvolumen
- 68: zwölftes Subvolumen
- 70: dreizehntes Subvolumen
- B1: erste Bezugsgeometrie
- B2: zweite Bezugsgeometrie
- B3: dritte Bezugsgeometrie

- M1: erstes Stauchungsmaß
- M2: zweites Stauchungsmaß
- M3: drittes Stauchungsmaß
- M4: viertes Stauchungsmaß
- M5: fünftes Stauchungsmaß

- S1: erster Schritt
- S2: zweiter Schritt
- S3: dritter Schritt
- S4: vierter Schritt
- S5: fünfter Schritt
- S6: sechster Schritt
- S7: siebter Schritt
- S8: achter Schritt
- S9: neunter Schritt
- S10: zehnter Schritt
- S11: elfter Schritt

## Patentansprüche

1. Verfahren zum Bestimmen eines Innenaufbaus (30) eines Ersatzzahns (24), umfassend:
- erhalten von Außenhülledaten, die eine äußere Hülle (28) des Ersatzzahns (24) beschreiben,
- definieren oder erhalten einer ersten Bezugsgeometrieinformation, die eine erste Bezugsgeometrie (B1) beschreibt, welche die äußere Hülle (28) des Ersatzzahns (24) virtuell in einen ersten Hüllenabschnitt (28a) und einen zweiten Hüllenabschnitt (28b) unterteilt, **gekennzeichnet durch**
- erstellen einer ersten Stauchungshülle (32) durch virtuelles Stauchen des ersten Hüllenabschnitts (28a) in eine Richtung zur ersten Bezugsgeometrie (B1) um ein erstes Stauchungsmaß (M1), wobei die erste Bezugsgeometrie (B1) eine Stauchungsbasis darstellt, und
- ableiten wenigstens eines Subvolumens (34, 36) des Ersatzzahns (24) als ein von der ersten Stauchungshülle (32) begrenztes Volumen.

2. Verfahren nach Anspruch 1, ferner umfassend:
- erstellen einer zweiten Stauchungshülle (38) durch virtuelles Stauchen des ersten Hüllenabschnitts (28a) oder der ersten Stauchungshülle (32) in eine Richtung zur ersten Bezugsgeometrie (B1) um ein zweites Stauchungsmaß (M2), wobei die erste Bezugsgeometrie (B1) eine Stauchungsbasis darstellt, und
- ableiten wenigstens eines Subvolumens (40, 42, 44) des Ersatzzahns als ein von der zweiten Stauchungshülle (38) begrenztes Volumen.

3. Verfahren nach Anspruch 1 oder 2, ferner umfassend:
- definieren oder erhalten einer zweiten Bezugsgeometrieinformation, die eine zweite Bezugsgeometrie (B2) beschreibt, welche von der ersten Bezugsgeometrie (B1) verschieden ist und welche die äußere Hülle (28) des Ersatzzahns (24) virtuell in einen dritten Hüllenabschnitt (28c) und einen vierten Hüllenabschnitt (28d) unterteilt,
- erstellen einer dritten Stauchungshülle (56) durch virtuelles Stauchen des dritten Hüllenabschnitts (28c) oder der ersten Stauchungshülle (32) oder der zweiten Stauchungshülle (38) in eine Richtung zur zweiten Bezugsgeometrie (B2) um ein drittes Stauchungsmaß (M3), wobei die zweite Bezugsgeometrie (B2) eine Stauchungsbasis darstellt, und
- ableiten wenigstens eines Subvolumens (58, 60) des Ersatzzahns (24) als ein von der dritten Stauchungshülle (56) begrenztes Volumen.

4. Verfahren nach einem der vorhergehenden Ansprüche, ferner umfassend: Zuordnen einer Materialinformation, einer Farbinformation, einer Transluzenzinformation und/oder einer Anatomieinformation zu einem oder mehreren der Subvolumen (34, 36, 40, 42, 44, 58, 60).

5. Verfahren nach einem der vorhergehenden Ansprüche, wobei wenigstens eine Bezugsgeometrie (B1, B2, B3) durch eine Äquatorlinie der äußeren Hülle (28) des Ersatzzahns (24) definiert ist oder
wobei wenigstens eine Bezugsgeometrie (B1, B2, B3) durch eine Ebene definiert ist, die einen Massenschwerpunkt und/oder Volumenschwerpunkt der äußeren Hülle (28) des Ersatzzahns (24) beinhaltet oder
wobei wenigstens eine Bezugsgeometrie (B1, B2, B3) durch eine Ebene definiert ist, die einen Extrempunkt (52, 54) der äußeren Hülle (28) des Ersatzzahns (24) beinhaltet.

6. Verfahren nach einem der vorhergehenden Ansprüche, ferner umfassend: Ignorieren von Abschnitten wenigstens einer Stauchungshülle (32, 38, 56), die außerhalb der äußeren Hülle (28) des Ersatzzahns (24) liegen.

7. Verfahren nach einem der vorhergehenden Ansprüche, wobei eine Stauchungsrichtung entlang einer Zahnhöhenrichtung des Ersatzzahns (24), einer Zahnbreitenrichtung des Ersatzzahns (24) oder einer Zahntiefenrichtung des Ersatzzahns (24) verläuft.

8. Verfahren nach einem der vorhergehenden Ansprüche, ferner umfassend: Ermitteln eines Zahntyps des Ersatzzahns (24) basierend auf den Außenhülledaten oder erhalten einer Zahntypinformation, die einen Zahntyp des Ersatzzahns (24) beschreibt, und wählen des Stauchungsmaßes (M1, M2, M3) und/oder der Bezugsgeometrie (B1, B2, B3) in Abhängigkeit des Zahntyps.

9. Verfahren nach einem der vorhergehenden Ansprüche, ferner umfassend: Ermitteln einer Zahneigenschaft des Ersatzzahns (24) basierend auf den Außenhülledaten oder erhalten einer Zahneigenschaftsinformation, die eine Zahneigenschaft des Ersatzzahns (24) beschreibt, und
wählen des Stauchungsmaßes (M1, M2, M3) und/oder der Bezugsgeometrie (B1, B2, B3) in Abhängigkeit der Zahneigenschaft.

10. Verfahren nach einem der vorhergehenden Ansprüche, ferner umfassend: Bereitstellen einer Innenaufbauinformation, die wenigstens eine Geometrie und/oder Lage eines Subvolumens (34, 36, 40, 42, 44, 58, 60) beschreibt.

11. Verfahren zur Herstellung eines Ersatzzahns (24) mit einer vorgegebenen äußeren Hülle (28), umfassend:
- bestimmen eines Innenaufbaus (30) des Ersatzzahns (24) mit wenigstens einem Subvolumen mittels des Verfahrens nach einem der vorhergehenden Ansprüche, und
- fertigen des Ersatzzahns (24) mit dem bestimmten Innenaufbau (30) mittels Werkstoffen, die sich in wenigstens einem ausgewählt aus Material, Farbe und Transluzenz unterscheiden.

12. Ersatzzahn (24) mit einer äußeren Hülle (28) und einem Innenaufbau (30), wobei der Innenaufbau (30) mittels des Verfahrens nach einem der Ansprüche 1 bis 10 bestimmt ist.

13. Vorrichtung (10) zur Datenverarbeitung, umfassend Mittel (20) zur Ausführung des Verfahrens nach einem der Ansprüche 1 bis 10.

14. Computerprogramm (18), umfassend Befehle, die bei der Ausführung des Computerprogramms (18) durch einen Computer diesen veranlassen, das Verfahren nach einem der Ansprüche 1 bis 10 auszuführen.

15. Computerlesbares Medium (16), umfassend Befehle, die bei der Ausführung durch einen Computer diesen veranlassen, das Verfahren nach einem der Ansprüche 1 bis 10 auszuführen.

## Claims

1. Method for determining an internal structure (30) of a replacement tooth (24), comprising:
- obtaining outer shell data describing an outer shell (28) of the replacement tooth (24),
- defining or obtaining first reference geometry information describing a first reference geometry (B1) which virtually divides the outer shell (28) of the replacement tooth (24) into a first shell portion (28a) and a second shell portion (28b),
**characterised by**
- creating a first compression shell (32) by virtually compressing the first shell portion (28a) in one direction with respect to the first reference geometry (B1) by a first degree of compression (M1), the first reference geometry (B1) forming a compression basis, and
- deriving at least one sub-volume (34, 36) of the replacement tooth (24) as a volume bounded by the first compression shell (32).

2. Method according to claim 1, further comprising:
- creating a second compression shell (38) by virtually compressing the first shell portion (28a) or the first compression shell (32) in one direction with respect to the first reference geometry (B1) by a second degree of compression (M2), the first reference geometry (B1) forming a compression basis, and
- deriving at least one sub-volume (40, 42, 44) of the replacement tooth as a volume bounded by the second compression shell (38).

3. Method according to either claim 1 or claim 2, further comprising:
- defining or obtaining second reference geometry information describing a second reference geometry (B2), which is different from the first reference geometry (B1) and virtually divides the outer shell (28) of the replacement tooth (24) into a third shell portion (28c) and a fourth shell portion (28d),
- creating a third compression shell (56) by virtually compressing the third shell portion (28c) or the first compression shell (32) or the second compression shell (38) in one direction with respect to the second reference geometry (B2) by a third degree of compression (M3), the second reference geometry (B2) forming a compression basis, and
- deriving at least one sub-volume (58, 60) of the replacement tooth (24) as a volume bounded by the third compression shell (56).

4. Method according to any of the preceding claims, further comprising: assigning material information, colour information, translucency information and/or anatomy information to one or more of the sub-volumes (34, 36, 40, 42, 44, 58, 60).

5. Method according to any of the preceding claims, wherein at least one reference geometry (B1, B2, B3) is defined by an equator line of the outer shell (28) of the replacement tooth (24), or
wherein at least one reference geometry (B1, B2, B3) is defined by a plane which includes a centre of mass and/or centre of volume of the outer shell (28) of the replacement tooth (24), or
wherein at least one reference geometry (B1, B2, B3) is defined by a plane which includes an extremum (52, 54) of the outer shell (28) of the replacement tooth (24).

6. Method according to any of the preceding claims, further comprising: ignoring portions of at least one compression shell (32, 38, 56) which are outside the outer shell (28) of the replacement tooth (24).

7. Method according to any of the preceding claims, wherein a compression direction extends along a tooth height direction of the replacement tooth (24), a tooth width direction of the replacement tooth (24) or a tooth depth direction of the replacement tooth (24).

8. Method according to any of the preceding claims, further comprising: determining a tooth type of the replacement tooth (24) on the basis of the outer shell data or obtaining tooth type information describing a tooth type of the replacement tooth (24), and
selecting the degree of compression (M1, M2, M3) and/or the reference geometry (B1, B2, B3) as a function of the tooth type.

9. Method according to any of the preceding claims, further comprising: determining a tooth property of the replacement tooth (24) on the basis of the outer shell data or obtaining tooth property information describing a tooth property of the replacement tooth (24), and
selecting the degree of compression (M1, M2, M3) and/or the reference geometry (B1, B2, B3) as a function of the tooth property.

10. Method according to any of the preceding claims, further comprising: providing internal structure information describing at least a geometry and/or position of a sub-volume (34, 36, 40, 42, 44, 58, 60).

11. Method for producing a replacement tooth (24) with a predetermined outer shell (28), comprising:
- determining an internal structure (30) of the replacement tooth (24) with at least one sub-volume by the method according to any of the preceding claims, and
- manufacturing the replacement tooth (24) with the determined internal structure (30) using materials which differ in at least a selected one of material, colour and translucency.

12. Replacement tooth (24) with an outer shell (28) and an internal structure (30), wherein the internal structure (30) is determined by the method according to any of claims 1 to 10.

13. Data processing device (10) comprising means (20) for carrying out the method according to any of claims 1 to 10.

14. Computer program (18) comprising commands which, when the computer program (18) is executed by a computer, cause said computer to carry out the method according to any of claims 1 to 10.

15. Computer-readable medium (16) comprising commands which, when executed by a computer, cause said computer to carry out the method according to any of claims 1 to 10.

## Revendications

1. Procédé pour déterminer une structure interne (30) d'une dent de remplacement (24), comprenant de :
- obtenir des données d'enveloppe extérieure qui décrivent une enveloppe extérieure (28) de la dent de remplacement (24),
- définir ou obtenir une première information sur une géométrie de référence qui décrit une première géométrie de référence (B1) qui divise virtuellement l'enveloppe extérieure (28) de la dent de remplacement (24) en une première partie d'enveloppe (28a) et une deuxième partie d'enveloppe (28b), **caractérisé par**
- créer une première enveloppe de compression (32) en comprimant virtuellement la première partie d'enveloppe (28a) dans une direction par rapport à la première géométrie de référence (B1) d'une première proportion de compression (M1), dans lequel la première géométrie de référence (B1) constitue une base de compression, et
- déduire au moins un sous-volume (34, 36) de la dent de remplacement (24) sous la forme d'un volume délimité par la première enveloppe de compression (32).

2. Procédé selon la revendication 1, comprenant en outre de :
- créer une deuxième enveloppe de compression (38) en comprimant virtuellement la première partie d'enveloppe (28a) ou la première enveloppe de compression (32) dans une direction par rapport à la première géométrie de référence (B1) d'une deuxième proportion de compression (M2), dans lequel la première géométrie de référence (B1) constitue une base de compression, et
- déduire au moins un sous-volume (40, 42, 44) de la dent de remplacement (24) sous la forme d'un volume délimité par la deuxième enveloppe de compression (38).

3. Procédé selon la revendication 1 ou 2, comprenant en outre de :
- définir ou obtenir une seconde information sur une géométrie de référence qui décrit une seconde géométrie de référence (B2) qui est différente de la première géométrie de référence (B1) et qui divise virtuellement l'enveloppe extérieure (28) de la dent de remplacement (24) en une troisième partie d'enveloppe (28c) et une quatrième partie d'enveloppe (28d),
- créer une troisième enveloppe de compression (56) en comprimant virtuellement la troisième partie d'enveloppe (28c) ou la première enveloppe de compression (32) ou la deuxième enveloppe de compression (38) dans une direction par rapport à la seconde géométrie de référence (B2) d'une troisième proportion de compression (M3), dans lequel la seconde géométrie de référence (B2) constitue une base de compression ; et
- déduire au moins un sous-volume (58, 60) de la dent de remplacement (24) sous la forme d'un volume délimité par la troisième enveloppe de compression (56).

4. Procédé selon l'une des revendications précédentes, comprenant en outre de : affecter une information sur un matériau, une information sur une couleur, une information sur la translucidité et/ou une information sur l'anatomie à un ou plusieurs des sous-volumes (34, 36, 40, 42, 44, 58, 60).

5. Procédé selon l'une des revendications précédentes, dans lequel au moins une géométrie de référence (B1, B2, B3) est définie par une ligne équatoriale de l'enveloppe extérieure (28) de la dent de remplacement (24) ; ou
dans lequel au moins une géométrie de référence (B1, B2, B3) est définie par un plan qui contient un centre de masse et/ou un centre de volume de l'enveloppe extérieure (28) de la dent de remplacement (24) ; ou
dans lequel au moins une géométrie de référence (B1, B2, B3) est définie par un plan qui contient un point extrémal (52, 54) de l'enveloppe extérieure (28) de la dent de remplacement (24).

6. Procédé selon l'une des revendications précédentes, comprenant en outre de : ignorer des parties d'au moins une enveloppe de compression (32, 38, 56) qui sont à l'extérieur de l'enveloppe extérieure (28) de la dent de remplacement (24).

7. Procédé selon l'une des revendications précédentes, dans lequel une direction de compression s'étend le long d'une direction de hauteur dentaire de la dent de remplacement (24), d'une direction de largeur dentaire de la dent de remplacement (24) ou d'une direction de profondeur dentaire de la dent de remplacement (24).

8. Procédé selon l'une des revendications précédentes, comprenant en outre de :
déterminer un type de dent de la dent de remplacement (24) sur la base des données d'enveloppe extérieure ou obtenir une information sur un type de dent qui décrit un type de dent de la dent de remplacement (24), et
choisir la proportion de compression (M1, M2, M3) et/ou la géométrie de référence (B1, B2, B3) en fonction du type de dent.

9. Procédé selon l'une des revendications précédentes, comprenant en outre de :
déterminer une propriété dentaire de la dent de remplacement (24) sur la base des données d'enveloppe extérieure ou obtenir une information sur une propriété dentaire qui décrit une propriété dentaire de la dent de remplacement (24), et
choisir la proportion de compression (M1, M2, M3) et/ou la géométrie de référence (B1, B2, B3) en fonction de la propriété dentaire.

10. Procédé selon l'une des revendications précédentes, comprenant en outre de : fournir une information sur une structure interne qui décrit au moins une géométrie et/ou un emplacement d'un sous-volume (34, 36, 40, 42, 44, 58, 60).

11. Procédé de fabrication d'une dent de remplacement (24) ayant une enveloppe extérieure (28) prédéfinie, comprenant de :
- déterminer une structure interne (30) de la dent de remplacement (24) avec au moins un sous-volume au moyen du procédé selon l'une des revendications précédentes, et
- fabriquer la dent de remplacement (24) avec la structure interne (30) déterminée au moyen de matériaux qui diffèrent par au moins un choisi parmi un matériau, une couleur et une translucidité.

12. Dent de remplacement (24) ayant une enveloppe extérieure (28) et une structure interne (30), dans laquelle la structure interne (30) est déterminée au moyen du procédé selon l'une des revendications 1 à 10.

13. Dispositif (10) de traitement de données, comprenant des moyens (20) pour mettre en œuvre le procédé selon l'une des revendications 1 à 10.

14. Programme informatique (18) comprenant des instructions qui, lors de l'exécution du programme informatique (18) par un ordinateur, amènent celui-ci à mettre en œuvre le procédé selon l'une des revendications 1 à 10.

15. Support lisible par ordinateur (16), comprenant des instructions qui, lorsqu'elles sont exécutées par un ordinateur, amènent celui-ci à mettre en œuvre le procédé selon l'une des revendications 1 à 10.
